# EUROPEAN PATENT APPLICATION

(11) **EP 4 084 030 A1**
(43) Date of publication of application: **02.11.2022**
(21) Application number: 20906570.5
(22) Date of filing: 23.12.2020
(51) Int. Cl.: H01G 11/80, H01M 50/10, H01M 50/172, H01M 50/183, H01M 50/543, H01M 50/572, H01G 2/10, B32B 7/022

(54) **RESIN FILM FOR TERMINAL AND SELECTION METHOD THEREFOR, ELECTRICITY STORAGE DEVICE, AND TERMINAL FILM FOR ELECTRICITY STORAGE DEVICE**

(30) Priority: 27.12.2019 JP 2019238452; 25.03.2020 JP 2020054033
(71) Applicant: TOPPAN INC., Tokyo 110-0016 (JP)
(72) Inventor: IMAMOTO, Junya, Tokyo 110-0016 (JP)
(74) Representative: Hoffmann Eitle
(86) International application number: PCT/JP2020/048134
(87) International publication number: WO 2021/132318

(57) **Abstract**

A terminal-coating resin film according to one aspect of the present disclosure is so disposed in a power storage device including a power storage device body and a terminal electrically connected to the power storage device body as to cover an outer peripheral surface of part of the terminal. The terminal-coating resin film has a single-layer structure or a multilayer structure and includes a resin layer having at least one secondary dispersion peak γ within a range of -130°C to -50°C in a profile of a loss tangent tan δ obtained by dynamic viscoelastic measurement under a condition of 1.0 Hz. A power storage device terminal-coating film according to one aspect of the present disclosure is so disposed in a power storage device including a power storage device body and a metal terminal electrically connected to the power storage device body as to cover an outer peripheral surface of part of the metal terminal. The terminal-coating film is comprised of a resin composition including a first resin including polyolefin and a second resin including at least one resin selected from polyester, polyamide, polycarbonate, and polyphenylene ether.

## Description

### [Technical Field]

The present disclosure relates to a terminal-coating resin film to be so disposed in a power storage device including a power storage device body and a terminal electrically connected to the power storage device body as to cover the outer peripheral surface of part of the terminal, and to a method for selecting the terminal-coating resin film. The present disclosure also pertains to a power storage device that uses a terminal-coating resin film. Furthermore, the present disclosure relates to a power storage device terminal-coating film to be so disposed in a power storage device including a power storage device body and a metal terminal electrically connected to the power storage device body as to cover the outer peripheral surface of part of the metal terminal.

### [Background Art]

As power storage devices, there are known, for example, secondary batteries, such as lithium-ion batteries, nickel hydride batteries, and lead batteries, and electrochemical capacitors, such as electric double-layer capacitors. Due to miniaturization of mobile devices, limitation of installation spaces, or other reasons, further miniaturization of power storage devices is sought, and thus attention is being given to lithium-ion batteries having high energy density. The conventional packaging materials for lithium-ion batteries have been metal cans. However, multilayer films have been increasingly used due to their light weight, high heat dissipation, and low production cost.

A lithium-ion battery that uses the above multilayer film in the packaging material is referred to as a laminated lithium-ion battery. The packaging material covers the contents of the battery (such as a cathode, a separator, an anode, and an electrolyte solution) and prevents moisture from entering the inside. The laminated lithium-ion batteries are produced by, for example, forming a recess for accommodating the battery contents in a portion of the packaging material by cold forming, folding back the remaining part of the packaging material, and sealing the edge portions by heat sealing (see, for example, PTL 1).

The laminated lithium-ion batteries are provided with current output terminals (which may also be referred to as tab leads). For purposes such as improving adhesion between each current output terminal and the packaging material, a terminal-coating resin film (which may also be referred to as a tab sealant) may be disposed to cover part of the outer periphery of the current output terminal (see, for example, PTLs 2 to 4).

### [Citation List]

### [Patent Literature]

[PTL 1] JP 2013-101765 A
[PTL 2] JP 2008-4316 A
[PTL 3] JP 2010-218766 A
[PTL 4] JP 2009-259739 A

### [Summary of the Invention]

### [Technical Problem]

Power storage devices, which are referred to as fully solid-state batteries, are under research and development as next-generation batteries replacing lithium-ion batteries. Fully solid-state batteries are characterized by usage of a solid electrolyte as an electrolytic substance, without using an organic electrolyte solution. Lithium-ion batteries cannot be used under temperature conditions higher than the boiling point of their electrolyte solution (about 80°C), whereas fully solid-state batteries can be used under temperature conditions higher than 100°C, and can enhance conductivity of the lithium ions when the batteries are used under high-temperature conditions (e.g., 100°C to 150°C).

However, if laminated fully solid-state batteries are produced using the laminates mentioned above as packaging materials, sealing properties of the packages for the fully solid-state batteries may be insufficient due to the terminal-coating resin films having insufficient heat resistance.

One aspect of the present disclosure provides a terminal-coating resin film that achieves both the seal strength under high temperatures and initial seal strength at a sufficiently high level and a method for selecting the terminal-coating resin film. One aspect of the present disclosure provides a power storage device that uses the terminal-coating resin film.

If laminated fully solid-state batteries are produced using the laminates mentioned above as packaging materials, sealing properties of the packages for the fully solid-state batteries may be insufficient due to the terminal-coating films having insufficient heat resistance. From the perspective of providing the heat seal strength in a high-temperature environment, the present inventors have found that, if resin that has high heat resistance is used for the terminal-coating film, which will be bonded by heat sealing, the heat seal strength in a room-temperature environment is undesirably reduced when the battery is returned to a room-temperature environment after being used in a high-temperature environment.

For this reason, another aspect of the present disclosure provides a power storage device terminal-coating film that provides good heat seal strength in a high-temperature environment and also provides good heat seal strength in a room-temperature environment after being exposed to the high-temperature environment.

### [Solution to Problem]

The terminal-coating resin film according to one aspect of the present disclosure is so disposed in a power storage device including a power storage device body and a terminal electrically connected to the power storage device body as to cover an outer peripheral surface of part of the terminal. The terminal-coating resin film has a single-layer structure or a multilayer structure and includes a resin layer having at least one secondary dispersion peak γ within a range of -130°C to -50°C in a profile of a loss tangent tan δ obtained by dynamic viscoelastic measurement under a condition of 1.0 Hz.

The secondary dispersion peak γ is an index of the molecular motion of the resin material constituting the resin layer or, more specifically, a parameter that reflects the local torsional motion of the main chain and the thermal motion of entire side chains in a crystalline region and an amorphous region of the resin material. According to studies conducted by the present inventors, the resin layer that satisfies the above requirements concerning the secondary dispersion peak γ includes a resin material that starts the molecular motion at a relatively high temperature and can exert good seal strength under high temperatures. This means that the lower the temperature at which the secondary dispersion peak γ appears, the more flexible the resin layer, and the higher the temperature at which the secondary dispersion peak γ appears, the higher the heat resistance of the resin layer.

The resin layer preferably has at least one primary dispersion peak α within a range of 30°C to 130°C in the profile of the above tan δ. The primary dispersion peak α is a parameter that reflects the micro-Brownian motion of the molecular chain in the amorphous region in the vicinity of the glass-transition temperature (Tg) of the resin material included in the resin layer. According to studies conducted by the present inventors, the resin layer that satisfies the above requirements concerning the primary dispersion peak α includes a resin material that starts molecular motion at a relatively low temperature (for example, room temperature) and has high flexibility. Thus, the resin layer can exert even higher seal strength (initial seal strength) in a room-temperature environment. This means that the lower the temperature at which the primary dispersion peak α appears, the more flexible the resin layer, and the higher the temperature at which the primary dispersion peak α appears, the higher the heat resistance of the resin layer.

The resin layer preferably contains a plasticizer. The temperature at which the secondary dispersion peak γ and the primary dispersion peak α appear can be controlled by adjusting the content of the plasticizer in the resin layer. For example, increasing the content of the plasticizer shifts the secondary dispersion peak γ and the primary dispersion peak α toward lower temperatures.

The terminal-coating resin film preferably contains a hydrogen sulfide adsorbent. The hydrogen sulfide adsorbent may be contained in the above resin layer or other layers in the case where the terminal-coating resin film has a multilayer structure. Fully solid-state batteries use, for example, a sulfide-based electrolyte, an oxide-based electrolyte, or an organic polymer-based electrolyte as the electrolyte. Among these, in the case where the sulfide-based electrolyte is used, moisture entering the cell generates hydrogen sulfide. This may undesirably decrease the adhesion between the outer peripheral surface of the terminal and the terminal-coating resin film. The terminal-coating resin film containing the hydrogen sulfide adsorbent maintains good seal strength under room temperature and high temperatures even after being exposed to hydrogen sulfide.

One aspect of the present disclosure relates to a method for selecting a terminal-coating resin film to be so disposed in a power storage device including a power storage device body and a terminal electrically connected to the power storage device body as to cover an outer peripheral surface of part of the terminal. The selecting method includes the following steps.
(A) A step of conducting dynamic viscoelastic measurement on a terminal-coating resin film that is to be evaluated, under a condition of 1.0 Hz.
(B) A step of determining whether at least one secondary dispersion peak γ exists within a range of -130°C to -50°C in a profile of a loss tangent tan δ obtained by the dynamic viscoelastic measurement.

The power storage device terminal-coating film (hereinafter, simply referred to as the terminal-coating film in some cases) according to another aspect of the present disclosure is a power storage device terminal-coating film to be so disposed in a power storage device including a power storage device body and a metal terminal electrically connected to the power storage device body as to cover an outer peripheral surface of part of the metal terminal. The terminal-coating film is comprised of a resin composition including a first resin and a second resin, the first resin including polyolefin, the second resin including at least one resin selected from polyester, polyamide, polycarbonate, and polyphenylene ether.

The use of the second resin improves the heat seal strength of the terminal-coating film in a high-temperature environment. However, the present inventors found that the use of the second resin alone decreases the heat seal strength in a room-temperature environment and hinders providing good heat seal strength in both environments. The second resin is a resin with high heat resistance, and although its performance in use in a high-temperature environment has been studied, the fact that the heat seal strength in a room-temperature environment changes before and after the exposure to a high-temperature environment has not been studied sufficiently. Since the fully solid-state batteries are repeatedly placed in a high-temperature environment when in use and a room-temperature environment when not in use, the heat seal strength of the terminal-coating film is required to resist deterioration in both usage environments. As a result of intensive studies, the present inventors found that combining the first resin and the second resin inhibits the deterioration of the heat seal strength in a high-temperature environment and a room-temperature environment. That is, the power storage device terminal-coating film combines a specific first resin and a specific second resin as the material of the terminal-coating film. This provides good heat seal strength in a high-temperature environment and also in a room-temperature environment.

The power storage device terminal-coating film preferably contains modified polyolefin having a polar group that reacts with polyester, polyamide, polycarbonate, or polyphenylene ether.

In the power storage device terminal-coating film, the modified polyolefin is preferably maleic anhydride-modified polyolefin.

The first resin and the second resin are not necessarily always compatible and may have insufficient dispersibility. Thus, the advantage of the combined use as described above is not sufficiently obtained in some cases. In contrast, the first resin that includes the modified polyolefin including the polar group that reacts with the second resin improves the compatibility of the first resin and the second resin, thereby improving the dispersibility. As a result, a sufficient synergistic effect generated by the combination of the first resin and the second resin is obtained, and better heat seal strength is provided in a high-temperature environment and also in a room-temperature environment. In the case where the modified polyolefin is polyolefin modified with maleic anhydride, the above advantage is more sufficiently obtained.

The first resin may include the above modified polyolefin and polyolefin that does not include the polar group that reacts with the second resin (unmodified polyolefin). Since the modified polyolefin tends to have a low melting point and a low molecular weight due to the modification, combined use with normal polyolefin (unmodified polyolefin) inhibits the decrease in the heat seal strength in a high-temperature environment. Note that, in using the modified polyolefin and the unmodified polyolefin together, the modified polyolefin serves as a compatibilizer and improves the dispersibility of the unmodified polyolefin and the second resin.

In the power storage device terminal-coating film, polyester or polyamide contained in the terminal-coating film preferably exhibits a crystallinity of 10% or more and less than 70% after the terminal-coating film is heat-sealed under conditions of 260°C at 0.5 Mpa for three seconds and cooled at room temperature. When the crystallinity of polyester and/or polyamide measured by the above method is within the range mentioned above, the heat seal strength in a high-temperature environment is further improved, and the flexibility of the terminal-coating film is further improved.

In the power storage device terminal-coating film, the terminal-coating film preferably contains a hydrogen sulfide adsorbent. The hydrogen sulfide adsorbent may be contained in the above terminal-coating film or in other layers in the case where the terminal-coating film has a multilayer structure. Fully solid-state batteries use, for example, a sulfide-based electrolyte, an oxide-based electrolyte, or an organic polymer-based electrolyte as the electrolyte. Among these, in the case where the sulfide-based electrolyte is used, moisture entering the cell generates hydrogen sulfide. This may undesirably decrease the adhesion between the outer peripheral surface of the terminal and the terminal-coating film. The terminal-coating film containing the hydrogen sulfide adsorbent maintains good seal strength under room temperature and high temperatures even after being exposed to hydrogen sulfide.

### [Advantageous Effects of the Invention]

One aspect of the present disclosure provides a terminal-coating resin film that achieves both the seal strength under high temperatures and the initial seal strength at a sufficiently high level and a method for selecting the terminal-coating resin film. The present disclosure also provides a power storage device that uses the above terminal-coating resin film. Another aspect of the present disclosure provides a power storage device terminal-coating film that achieves both the seal strength under high temperatures and the initial seal strength under room temperature at a sufficiently high level.

### [Brief Description of the Drawings]

FIG. 1 is a perspective view illustrating an example of a fully solid-state battery.
FIG. 2 is a schematic cross-sectional view illustrating an example of a power storage device packaging material.
FIGs. 3(a) to 3(c) are schematic cross-sectional views each illustrating a configuration of a sealant layer of the power storage device packaging material.
FIG. 4 is a schematic cross-sectional view taken along line IV-IV of FIG. 1, illustrating a configuration of a tab (a terminal-coating resin film and a metal terminal) of the fully solid-state battery.
FIGs. 5(a) to 5(c) are schematic cross-sectional views each illustrating an example of a configuration of a terminal-coating resin film.
FIG. 6 is a schematic plan view illustrating an evaluation sample produced for Examples and Comparative Examples.

### [Description of the Embodiments]

Referring to the drawings, some embodiments of the present disclosure will be described in detail. In the drawings, like components are given like reference signs to omit duplicate description. Also, dimensional ratios in the drawings are not limited to the ratios shown in the drawings.

### <Power Storage Device>

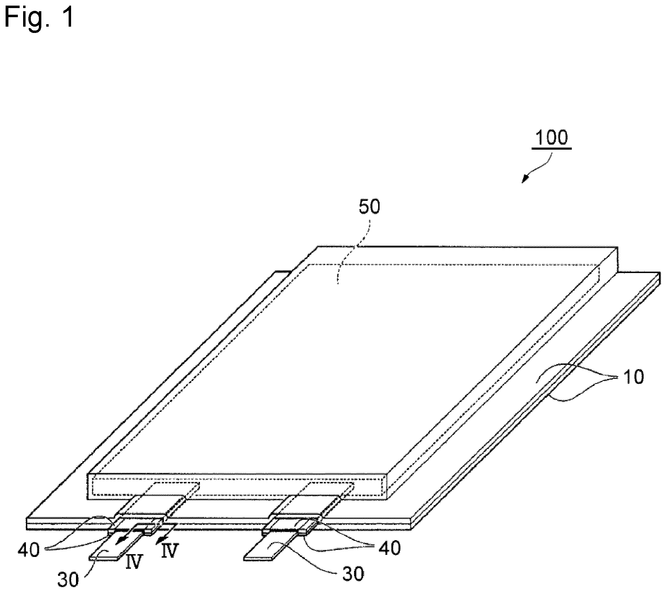

FIG. 1 is a schematic perspective view illustrating a configuration of a power storage device according to the present embodiment. FIG. 1 shows a power storage device 100 as an example of a fully solid-state battery, referring to which the following description will be provided. It should be noted that a power storage device having a configuration shown in Fig. 1 may be referred to as a battery pack or a battery cell.

The power storage device 100 as a fully solid-state battery includes a power storage device body 50, a packaging material 10, two metal terminals 30, and a terminal-coating resin film 40 (also referred to as tab sealant or terminal-coating film). The power storage device body 50 is a battery body that is charged or discharged. The packaging material 10 covers surfaces of the power storage device body 50 and is in contact with part of the terminal-coating resin film 40.

### [Packaging Material]

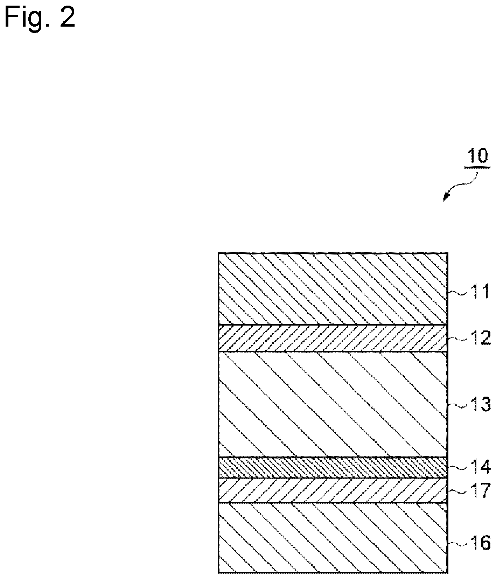

Fig. 2 is a cross-sectional view illustrating an example of a cross-section of the packaging material 10. The packaging material 10 has a multilayer structure in which a base layer 11, a first adhesive layer 12, a barrier layer 13, an anticorrosion treatment layer 14, a second adhesive layer 17, and a sealant layer 16 are provided in this order from the outer side toward the inner side (toward the power storage device body 50).

### (Sealant Layer)

The sealant layer 16 imparts sealability to the packaging material 10 when heat-sealed and is located on the inner side for heat-sealing when the power storage device is assembled.

The sealant layer 16 may be formed of, for example, a thermoplastic resin such as polyolefin, polyamide, polyester, polycarbonate, polyphenylene ether, polyacetal, polystyrene, polyvinyl chloride, and polyvinyl acetate. From the perspective of heat resistance and proper sealing, polyolefin, polyamide, or polyester is preferably used. Note that, to directly laminate the sealant layer 16 on the barrier layer without the adhesive agent, at least a layer in contact with the barrier layer preferably uses a resin modified with acid or glycidyl.

Examples of the polyolefin-based resin include low-, medium- and high-density polyethylenes; ethylene-a olefin copolymers; polypropylenes; and propylene-a olefin copolymers. The polyolefin resin in the form of a copolymer may be a block copolymer or may be a random copolymer.

Examples of the polyester-based resin include polyethylene terephthalate (PET) and polybutylene terephthalate (PBT). These polyester-based resins may be used singly or in combination of two or more. Alternatively, a resin obtained by the copolymerization of any acid and glycol may be used.

To impart sealability, heat resistance, and other functionalities, for example, an antioxidant, a slip agent, a flame retardant, an antiblocking agent, a light stabilizer, a dehydrating agent, a tackifier, a crystal nucleating agent, or a plasticizer may be added.

Although it depends on the application, the peak melting temperature of the sealant layer is preferably 160°C to 280°C to improve the heat resistance in the case of the packaging material for fully solid-state batteries.

The sealant layer 16 preferably has at least one secondary dispersion peak γ within the range of -130°C to -50°C in the profile of the loss tangent tan δ obtained by dynamic viscoelastic measurement under the condition of 1.0 Hz. With the sealant layer 16 satisfying the above conditions, the packaging material 10 achieves both the seal strength under high temperatures and the initial seal strength (seal strength at room temperature) at a sufficiently high level. The temperature range in which the secondary dispersion peak γ exists is more preferably -120°C to -60°C, and even more preferably -110°C to -70°C from the perspective of the seal strength under room temperature and high temperatures. If the temperature at which the secondary dispersion peak γ exists is less than -130°C, the heat resistance of the sealant layer 16 is decreased, which may lead to insufficient seal strength under high temperatures. If the temperature at which the secondary dispersion peak γ exists exceeds -50°C, the flexibility of the sealant layer 16 is decreased, which may lead to insufficient seal strength at room temperature.

The above tan δ is calculated as follows. For example, the packaging material is immersed in an aqueous solution of sodium hydroxide to dissolve the barrier layer (metal foil), so that a film including only the sealant layer is extracted. The extracted film is measured by the method according to JIS K 7244-4 using a dynamic viscoelasticity measuring device (product of SII, trade name: DMS6100) under the following conditions. The loss tangent tan δ is calculated from the loss elastic modulus E" and the storage elastic modulus E'.
- Peeling mode: pulling
- Rate of temperature rise: 2°C/min
- Temperature range: -150°C to 150°C
- Frequency: 1.0 Hz

The sealant layer 16 preferably has at least one primary dispersion peak α within the range of 30°C to 130°C in the profile of the above tan δ. When the sealant layer 16 satisfies this condition, the packaging material 10 exhibits an even higher initial seal strength (seal strength at room temperature). The temperature range in which the primary dispersion peak α exists is preferably 40°C to 110°C, and more preferably 50°C to 100°C from the perspective of the seal strength at room temperature. If the temperature at which the primary dispersion peak α exists is less than 30°C, the heat resistance of the sealant layer 16 is decreased, and the seal strength under high temperatures tends to become insufficient. If the temperature at which the primary dispersion peak α exists exceeds 130°C, the flexibility of the sealant layer 16 is decreased, and the seal strength at room temperature tends to become insufficient.

The temperature at which the secondary dispersion peak γ and the primary dispersion peak α of the sealant layer 16 appear can be controlled by, for example, the configuration of the base resin material included in the sealant layer 16, the draw ratio of the sealant layer 16, or the content of an additive (for example, a plasticizer). The sealant layer 16 contains an additive as required. Examples of the additive include a plasticizer, an antioxidant, a slip agent, a flame retardant, an antiblocking agent (AB agent), a light stabilizer, a dehydrating agent, and a tackifier.

Examples of the base resin material contained in the sealant layer 16 include a polyester-based resin, a polyolefin-based resin, and a polyamide-based resin.

The polyester-based resin is obtained by the copolymerization of an acid component and a glycol component. Examples of the acid component include phthalic acid, terephthalic acid, isophthalic acid, naphthalenedicarboxylic acid, cyclohexanedicarboxylic acid, adipic acid, and sebacic acid. Examples of the glycol component include ethylene glycol, butanediol, pentanediol, hexanediol, neopentyl glycol, diethylene glycol, polytetramethylene glycol, cyclohexanedimethanol, and propanediol. According to studies conducted by the present inventors, a typical PET (copolymer of terephthalic acid and ethylene glycol) has insufficient seal strength at room temperature since the temperature at which the secondary dispersion peak γ exists is out of the range of -130°C to -50°C. When a plasticizer is not added to the sealant layer 16, the sealant layer 16 preferably contains a polyester-based resin in which two or more kinds of glycol components are copolymerized with one kind of acid component.

Examples of the polyolefin-based resin include polyethylene and polypropylene resins. Since a typically used polyolefin resin is poor in heat resistance, amide-modified polyethylene or amide-modified polypropylene is preferably used.

Examples of the polyamide-based resin include nylon 6 and nylon 6, 6.

From the perspective of adjusting the temperature at which the secondary dispersion peak γ and the primary dispersion peak α of the sealant layer 16 appear, the sealant layer 16 preferably contains a plasticizer. The plasticizer may be, for example, an ester-based compound. Specific examples include glycol diesters, adipate esters, phthalate esters, diacetyl monoglyceride derivatives, and esters having an ether skeleton. Although it depends on the base resin material of the sealant layer 16, the content of the plasticizer in the sealant layer 16 is preferably 30 mass% or less relative to the mass of the sealant layer 16. If an excessive plasticizer is added to the sealant layer 16, the temperature at which the secondary dispersion peak γ and the primary dispersion peak α appear is excessively decreased, and the cohesive force tends to be decreased.

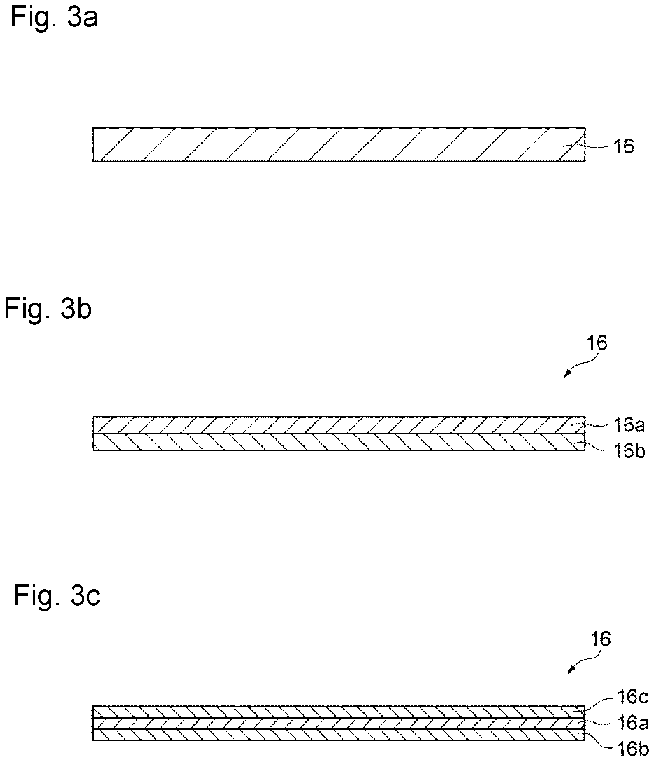

The sealant layer 16 may have a single-layer structure or a multilayer structure including two or more layers (see FIGs. 3(a) to 3(c)). The sealant layer, if it has a single-layer structure, is preferred to have a thickness in the range of 10 µm to 300 µm, and more preferably 20 µm to 100 µm. The sealant layer 16 having a thickness of 10 µm or more readily provides sufficient sealing properties and insulation properties, and the sealant layer 16 having a thickness of 300 µm or less provides sufficient cell volume.

FIG. 3(b) is a schematic cross-sectional view showing the sealant layer 16 having a two-layer structure. The sealant layer 16 shown in the figure includes a first resin layer 16a and a second resin layer 16b, which is formed on the inner surface of the first resin layer 16a. For example, the first resin layer 16a may be formed of material different from that of the second resin layer 16b and/or may have a thickness different from that of the second resin layer 16b. The thicknesses of the first resin layer 16a and the second resin layer 16b may be, for example, 5 µm to 300 µm, or may be 20 µm to 200 µm. As shown in FIG. 3(c), the sealant layer 16 may have a three-layer structure and further include a third resin layer 16c.

When the electrolyte of the fully solid-state battery is a sulfide-based electrolyte, the sealant layer 16 preferably contains a hydrogen sulfide adsorbent. The sealant layer 16 containing the hydrogen sulfide adsorbent maintains good seal strength under room temperature and high temperatures even after being exposed to hydrogen sulfide. The hydrogen sulfide adsorbent may be material that has the property of absorbing or adsorbing hydrogen sulfide. Specific examples include zinc oxide, amorphous metal silicate, hydroxides of zirconium or of lanthanoid, tetravalent metal phosphates, potassium permanganate, sodium permanganate, aluminum oxide, ferric hydroxide, silver sulfate, silver acetate, isocyanate compounds, aluminum silicate, aluminum potassium sulfate, zeolites, activated carbon, amine-based compounds, and ionomers.

The content of the hydrogen sulfide adsorbent in the sealant layer 16 is preferably in the range of 1 mass% to 50 mass%, more preferably 2 mass% to 25 mass%, and even more preferably 5 mass% to 15 mass% relative to the mass of the sealant layer 16. When the content of the hydrogen sulfide adsorbent in the sealant layer 16 is 1 mass% or more, the hydrogen sulfide is effectively adsorbed, and if the content is 50 mass% or less, the adhesion and the sealant suitability of the sealant layer 16 are both achieved. When the sealant layer 16 has a multi-layer structure, at least one layer contains a hydrogen sulfide adsorbent. A layer of the packaging material 10 other than the sealant layer 16 (for example, the second adhesive layer 17) may contain a sulfide-based electrolyte. However, from the perspective of the content of the hydrogen sulfide adsorbent, at least the sealant layer 16 preferably contains the hydrogen sulfide adsorbent.

### (Base Layer)

The base layer 11 imparts heat resistance to the packaging material in the sealing step during production of the power storage device and prevents formation of pinholes that may occur during forming or distribution. Particularly in the case of packaging materials for large power storage devices, scratch resistance, chemical resistance, insulating properties, and the like, can also be imparted.

The base layer 11 is preferably comprised of a resin film made of a resin having insulating properties. Examples of the resin film include stretched or unstretched films, such as polyester films, polyamide films, polypropylene films, and polyphenylene sulfide films. The base layer 11 may be a single-layer film made of one of these resin films, or a laminated film made of two or more of these resin films.

Of these, the base layer 11 is preferably a polyester film or a polyamide film, and more preferably a polyamide film, in terms of good formability. These films are preferably biaxially stretched films. For example, the polyester resin forming the polyester film may be, for example, a polyethylene terephthalate. Examples of polyamide resins used to form the polyamide film include nylon 6, nylon 6,6, a copolymer of nylon 6 and nylon 6,6, nylon 6,10, polymetaxylylene adipamide (MXD6), nylon 11, and nylon 12. Of these, nylon 6 (ONy) is preferred from the perspective of having good heat resistance, piercing strength, and impact strength.

The stretching methods used for the biaxially stretched film include, for example, sequential biaxial stretching, tubular biaxial stretching, simultaneous biaxial stretching, and the like. From the perspective of obtaining better deep drawing formability, the biaxially stretched film is preferably obtained using a tubular biaxial stretching method.

The base layer 11 preferably has a thickness in the range of 6 µm to 40 µm, and more preferably 10 µm to 30 µm. The base layer 11, when having a thickness of 6 µm or more, tends to improve pinhole resistance and insulation properties of the packaging material 10. The base layer 11, when having a thickness exceeding 40 µm, tends to increase the total thickness of the packaging material 10.

### (First Adhesive Layer)

The first adhesive layer 12 provides bonding between the base layer 11 and the barrier layer 13. The material used for forming the first adhesive layer 12 specifically includes, for example, a polyurethane resin prepared by reacting a bifunctional or higher functional isocyanate compound with a base resin such as a polyester polyol, polyether polyol, acrylic polyol, or carbonate polyol. These various polyols can be used alone or in combination of two or more according to the functions and performance sought in the packaging material. Moreover, other various additives and stabilizers may be added to the polyurethane resin mentioned above depending on the performance required of the adhesive.

The thickness of the first adhesive layer 12 is not particularly limited, but from the perspective of obtaining desired adhesive strength, conformability, processability, and the like, for example, the thickness is preferably 1 µm to 10 µm, and more preferably 3 µm to 7 µm.

### (Barrier Layer)

The barrier layer 13 has water vapor barrier properties to prevent moisture from entering the power storage device. Further, the barrier layer 13 has ductility and malleability for undergoing deep drawing. The barrier layer 13 may be various kinds of metal foil such as aluminum foil, stainless steel foil, and copper foil, or a metal vapor-deposited film, an inorganic oxide vapor-deposited film, a carbon-containing inorganic oxide vapor-deposited film, or a film on which these vapor-deposited films are provided. The barrier layer 13 is preferably made of metal foil and more preferably made of aluminum foil in view of mass (specific gravity), moisture resistance, processability, and cost.

The aluminum foil may preferably be soft aluminum foil, particularly one subjected to an annealing treatment in view of imparting a desired ductility and malleability at the time of forming. It is more preferable to use aluminum foil containing iron for the purpose of further imparting pinhole resistance, and ductility and malleability at the time of forming. The iron content in the aluminum foil is preferably in the range of 0.1 mass% to 9.0 mass%, and more preferably in the range of 0.5 mass% to 2.0 mass% relative to 100 mass% of aluminum foil. The iron content of 0.1 mass% or more leads to a packaging material 10 having better pinhole resistance, and ductility and malleability. The ion content of 9.0 mass% or less allows achieving a packaging material 10 having much better flexibility. Although an untreated aluminum foil can be used, a degreased aluminum foil is preferably used. When the aluminum foil is degreased, only one side of the aluminum foil may be degreased, or both sides may be degreased.

The thickness of the barrier layer 13 is not particularly limited, but is preferably in the range of 9 µm to 200 µm, and more preferably 15 µm to 100 µm taking barrier properties, pinhole resistance, and processability into consideration.

### (Anticorrosion Treatment Layer)

The anticorrosion treatment layer 14 is provided to prevent the corrosion of the barrier layer 13. The anticorrosion treatment layer 14 is formed by, for example, degreasing treatment, hydrothermal modification treatment, anodization treatment, chemical conversion treatment, or a combination of these treatments.

Examples of the degreasing treatment include acid degreasing treatment and alkaline degreasing treatment. Examples of the acid degreasing treatment include a method using an inorganic acid such as sulfuric acid, nitric acid, hydrochloric acid, and hydrofluoric acid alone, or a mixture of these acids. The acid degreasing treatment may include the use of an acid degreasing agent obtained by dissolving a fluorine-containing compound such as monosodium ammonium difluoride with the aforementioned inorganic acid. Specifically, when aluminum foil is used as the barrier layer 13, the use of this acid degreasing agent is effective in terms of the resistance to hydrofluoric acid, for its contribution to forming a fluoride of aluminum in a passive state, in addition to obtaining the effect of degreasing aluminum. Examples of the alkaline degreasing treatment include a method using sodium hydroxide or the like.

The hydrothermal modification treatment includes, for example, a boehmite treatment in which aluminum foil is immersed in boiling water to which triethanolamine has been added. The anodization treatment includes, for example, an alumite treatment.

The chemical conversion treatment involves immersion or coating. The chemical conversion treatment involving immersion includes, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments of mixed phases thereof. Examples of the chemical conversion treatment involving coating include a method of applying a coating agent having anticorrosion properties onto the barrier layer 13.

Of these anticorrosion treatments, when at least part of the anticorrosion treatment layer is formed by any of hydrothermal modification treatment, anodization treatment, and chemical conversion treatment, the degreasing treatment described above is preferably performed in advance. If degreased metal foil, such as annealed metal foil, is used as the barrier layer 13, performing the degreasing treatment again is unnecessary in forming the anticorrosion treatment layer 14.

The coating agent used for the chemical conversion treatment involving coating preferably contains trivalent chromium. The coating agent may contain at least one polymer selected from the group consisting of a cationic polymer and an anionic polymer to be described later.

Of the treatments mentioned above, the hydrothermal modification treatment and the anodization treatment, in particular, dissolve the surface of aluminum foil with a treatment agent and form an aluminum compound having good corrosion resistance (such as boehmite or alumite). Thus, these treatments, which form a co-continuous structure from the barrier layer 13 of aluminum foil to the anticorrosion treatment layer 14, are encompassed by the definition of the chemical conversion treatment. The anticorrosion treatment layer 14 can also be formed by only a pure coating method, which is not included in the definition of the chemical conversion treatment, as described later. For example, this coating method may be a method using a rare-earth oxide sol, such as cerium oxide with a mean particle size of 100 nm or less exhibiting an anticorrosion effect (inhibitor effect) for aluminum, as a material preferable in terms of environmental aspects. The use of this method makes it possible to prevent the corrosion of the metal foil such as aluminum foil even when an ordinary coating method is used.

Examples of the rare-earth oxide sol include sols using various solvents such as an aqueous solvent, an alcohol-based solvent, a hydrocarbon-based solvent, a ketone-based solvent, an ester-based solvent, and an ether-based solvent. Of these sols, an aqueous sol is preferable. For the rare-earth oxide sol, a dispersion stabilizer is typically used to stabilize the dispersion of the sol. Examples of the dispersion stabilizer include an inorganic acid, such as nitric acid, hydrochloric acid, or phosphoric acid, or salts thereof, and an organic acid, such as acetic acid, malic acid, ascorbic acid, or lactic acid. Of these dispersion stabilizers, phosphoric acid, in particular, is expected to impart the packaging material 10 with features such as (1) stabilizing dispersion of the sol, (2) improving adhesion to the barrier layer 13 utilizing an aluminum chelating ability of phosphoric acid, and (3) improving cohesive force of the anticorrosion treatment layer 14 (oxide layer) by readily inducing dehydration condensation of phosphoric acid even at a low temperature.

Since the anticorrosion treatment layer 14 formed of the rare-earth oxide sol is an aggregate of inorganic particles, the cohesive force of the layer itself may undesirably be lowered even after being dry-cured. Therefore, the anticorrosion treatment layer in this case is preferably compounded with an anionic polymer or a cationic polymer mentioned below to supplement the cohesive force.

The anticorrosion treatment layer is not limited to the layer mentioned above. For example, the anticorrosion treatment layer may be formed using a treatment agent that is obtained by adding phosphoric acid and a chromium compound to a resin binder (such as aminophenol) as in a coating-type chromate based on a known technique. When this treatment agent is used, the resultant layer will have both an anticorrosion function and adhesion. Although it is necessary to consider the stability of a coating solution, a coating agent may be prepared in advance by integrating a rare-earth oxide sol with a polycationic polymer or a polyanionic polymer, and using this coating agent, the anticorrosion treatment layer may be formed that has both the anticorrosion function and adhesion.

Regardless of having a multilayer structure or a single-layer structure, mass per unit area of the anticorrosion treatment layer is preferably 0.005 g/m² to 0.200 g/m², and more preferably 0.010 g/m² to 0.100 g/m². With the mass per unit area of 0.005 g/m² or more, the anticorrosion treatment layer easily prevents the corrosion of the barrier layer 13. Even if the mass per unit area exceeds 0.200 g/m², there is little change in the anticorrosion function. In contrast, when a rare earth oxide sol is used, a thick coating may cause insufficient thermal curing during drying and may possibly decrease the cohesive force. It should be noted that the thickness of the anticorrosion treatment layer 14 can be obtained by conversion from its specific gravity.

From the perspective of the adhesion between the sealant layer and the barrier layer, the anticorrosion treatment layer may be one containing, for example, cerium oxide, 1 part by mass to 100 parts by mass of phosphoric acid or phosphate relative to 100 parts by mass of the cerium oxide, and a cationic polymer, or may be one formed by applying chemical conversion treatment to the barrier layer 13, or may be one containing a cationic polymer and formed by applying chemical conversion treatment to the barrier layer.

### (Second Adhesive Layer)

The second adhesive layer 17 bonds the barrier layer 13 on which the anticorrosion treatment layer 14 is formed to the sealant layer 16. A general-purpose adhesive for bonding the barrier layer 13 to the sealant layer 16 may be used for the second adhesive layer 17.

If the anticorrosion treatment layer 14 has a layer containing at least one polymer selected from the group consisting of the cationic polymers and the anionic polymers mentioned above, the second adhesive layer 17 preferably contains a compound having reactivity (hereinafter also referred to as a reactive compound) with the polymer mentioned above contained in the anticorrosion treatment layer 14.

For example, if the anticorrosion treatment layer 14 contains a cationic polymer, the second adhesive layer 17 contains a compound having reactivity with the cationic polymer. If the anticorrosion treatment layer 14 contains an anionic polymer, the second adhesive layer 17 contains a compound having reactivity with the anionic polymer. If the anticorrosion treatment layer 14 contains both a cationic polymer and an anionic polymer, the second adhesive layer 17 contains a compound having reactivity with the cationic polymer and a compound having reactivity with the anionic polymer. However, the second adhesive layer 17 does not necessarily need to contain the two kinds of compounds, but may contain a compound having reactivity with both the cationic polymer and the anionic polymer. The expression having reactivity refers to forming a covalent bond with a cationic polymer or an anionic polymer. The second adhesive layer 17 may further contain an acid-modified polyolefin resin.

The compound having reactivity with the cationic polymer includes at least one compound selected from the group consisting of a polyfunctional isocyanate compound, a glycidyl compound, a compound having a carboxy group, and a compound having an oxazoline group.

Examples of the polyfunctional isocyanate compound, the glycidyl compound, the compound having a carboxy group, and the compound having an oxazoline group include a polyfunctional isocyanate compound, a glycidyl compound, a compound having a carboxy group, a compound having an oxazoline group, and the like mentioned above as a cross-linking agent for converting the cationic polymer into a cross-linked structure. Of these, a polyfunctional isocyanate compound is preferable in terms of having high reactivity with a cationic polymer and being readily formed into a cross-linked structure.

The compound having reactivity with the anionic polymer may be at least one compound selected from the group consisting of a glycidyl compound and a compound having an oxazoline group. Examples of the glycidyl compound and the compound having an oxazoline group include a glycidyl compound, a compound having an oxazoline group, and the like mentioned above, as a cross-linking agent for converting the cationic polymer into a cross-linked structure. Of these compounds, the glycidyl compound is preferable in terms of having high reactivity with an anionic polymer.

If the second adhesive layer 17 contains an acid-modified polyolefin resin, it is preferable that the reactive compound also has reactivity with the acidic group in the acid-modified polyolefin resin (i.e., forms a covalent bond with the acidic group). Thus, adhesion to the anticorrosion treatment layer 14 is further enhanced. In addition, the acid-modified polyolefin resin is permitted to have a cross-linked structure, which further improves solvent resistance of the packaging material 10.

The content of the reactive compound is preferably 1 to 10 equivalents relative to the acidic group in the acid-modified polyolefin resin. When the content is 1 or more equivalents, the reactive compound sufficiently reacts with the acidic group in the acid-modified polyolefin resin. If the content exceeds 10 equivalents, sufficient saturation is reached as a cross-linking reaction with the acid-modified polyolefin resin, and therefore unreacted substances may remain and thus various performances may deteriorate. Thus, for example, the content of the reactive compound is preferably 5 to 20 parts by mass (solid content ratio) relative to 100 parts by mass of the acid-modified polyolefin resin.

The acid-modified polyolefin resin is obtained by introducing an acidic group into a polyolefin resin. Examples of the acidic group include a carboxy group, a sulfonate group, and an acid anhydride group, and a maleic anhydride group and a (meth)acrylic acid group are particularly preferred. As an acid-modified polyolefin resin, for example, one that is the same as the modified polyolefin resin used for the sealant layer 16 can be used.

Various additives such as a flame retardant, a slip agent, an antiblocking agent, an antioxidant, a light stabilizer, and a tackifier may be added to the second adhesive layer 17.

Examples of the adhesive forming the second adhesive layer 17 preferably include a polyurethane resin prepared by reacting a bifunctional or higher functional isocyanate compound with a base resin such as a polyester polyol, polyether polyol, acrylic polyol, or carbonate polyol, and an epoxy resin prepared by reacting an amine compound with a base resin including an epoxy group from the perspective of the heat resistance.

The thickness of the second adhesive layer 17 is not particularly limited, but from the perspective of obtaining a desired adhesive strength, processability, and the like, the thickness is preferably in the range of 1 µm to 10 µm, and more preferably 2 µm to 7 µm.

### [Metal Terminal]

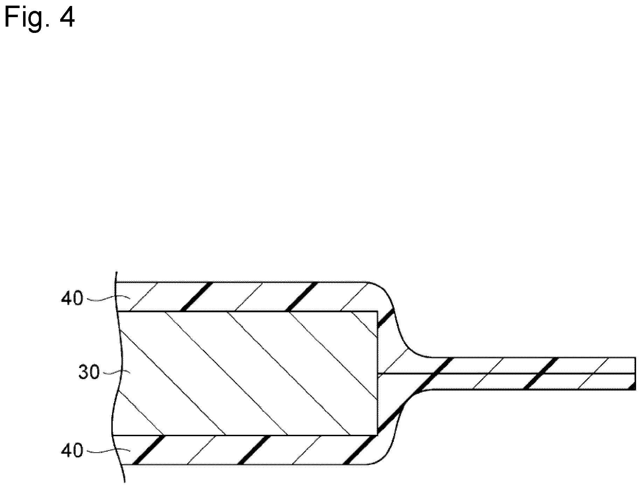

FIG. 4 is a cross-sectional view taken along line IV-IV of FIG. 1 illustrating a terminal-coating resin film and a metal terminal. Of two metal terminals 30, 30, one is electrically connected to the positive electrode of the power storage device body 50 and the other is electrically connected to the negative electrode thereof. The two metal terminals 30, 30 extend to the outside of the packaging material 10 from the power storage device body 50. The two terminals 30, 30 may each have a plate-like shape, for example.

Metal can be used as a material for the metal terminals 30. The material used for the metal terminals 30 may be determined considering, for example, the structure of the power storage device body 50, materials of the components of the power storage device body 50, and the like. For example, if the power storage device 100 is a fully solid-state battery, aluminum is preferred to be used as a material for the metal terminal 30 connected to the positive electrode of the power storage device body 50. As a material for the metal terminal 30 connected to the negative electrode of the power storage device body 50, copper having a nickel-plated layer on the surface thereof, or nickel is preferred to be used.

The metal terminals 30 each have a thickness depending on the size or capacity of the fully solid-state battery. If the fully solid-state battery has a small size, the thickness of the metal terminals 30 may be 50 µm or more, for example. If the fully solid-state battery has a large size suitable for electrical storage or vehicle installation, the thickness of the metal terminals 30 can be appropriately determined within the range of 100 µm to 500 µm, for example.

### [Terminal-Coating Resin Film]

As shown in FIG. 4, the terminal-coating resin film 40 is disposed to cover the outer peripheral surface of part of each metal terminal 30. Arrangement of the terminal-coating resin film 40 between the metal terminal 30 and the packaging material 10 can achieve even higher sealing properties and insulation properties for the power storage device 100. The terminal-coating resin film 40 has heat resistance equivalent to or exceeding that of the sealant layer 16 or the base layer 11 described above.

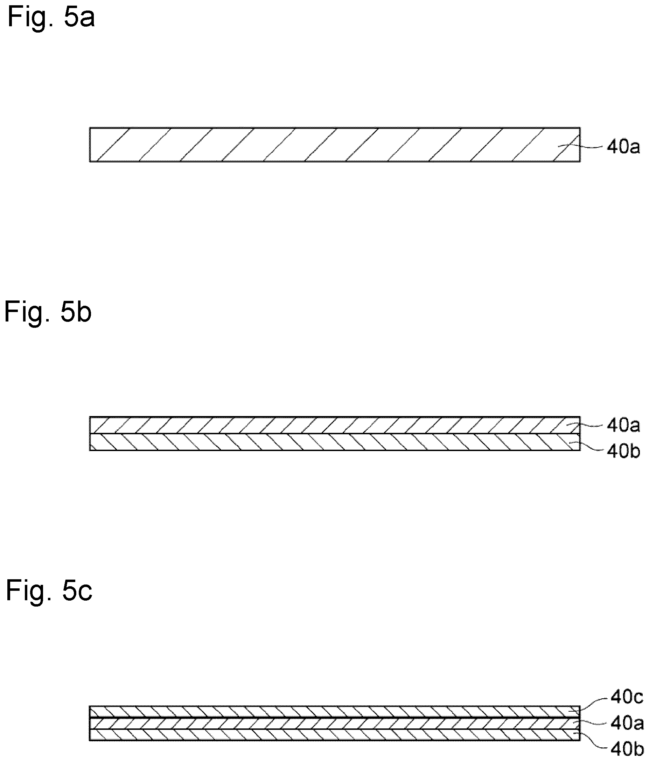

The terminal-coating resin film 40 includes a resin layer 40a having at least one secondary dispersion peak γ within the range of -130°C to -50°C in the profile of the loss tangent tan δ obtained by dynamic viscoelastic measurement under the condition of 1.0 Hz. The terminal-coating resin film 40 has a single-layer structure or a multilayer structure. The terminal-coating resin film 40 having a single-layer structure is constituted by the resin layer 40a (see FIG. 5(a)). The terminal-coating resin film 40 having a multilayer structure includes at least one resin layer (resin layer 40a) that satisfies the above conditions (see FIGs. 5(b) and 5(c)). In the case where the terminal-coating resin film 40 has a multilayer structure, from the perspective of the adhesion between the adjacent layers, all layers are preferably formed of similar resin materials.

The terminal-coating resin film 40 including the resin layer 40a achieves both the seal strength under high temperatures and the initial seal strength (seal strength at room temperature) at a sufficiently high level. The temperature range in which the secondary dispersion peak γ exists is preferably -120°C to -60°C, and more preferably -110°C to -70°C from the perspective of the seal strength under room temperature and high temperatures. If the temperature at which the secondary dispersion peak γ exists is less than -130°C, the heat resistance of the resin layer 40a is decreased, which may lead to insufficient seal strength under high temperatures. If the temperature at which the secondary dispersion peak γ exists exceeds -50°C, the flexibility of the resin layer 40a is decreased, which may lead to insufficient seal strength at room temperature.

The above tan δ is calculated as follows. The terminal-coating resin film 40 is measured by the method according to JIS K 7244-4 using a dynamic viscoelasticity measuring device (product of SII, trade name: DMS6100) under the following conditions. The loss tangent tan δ is calculated from the loss elastic modulus E" and the storage elastic modulus E'.
- Peeling mode: pulling
- Rate of temperature rise: 2°C/min
- Temperature range: -150°C to 150°C
- Frequency: 1.0 Hz

The resin layer 40a preferably has at least one primary dispersion peak α within the range of 30°C to 130°C in the profile of the above tan δ. When the resin layer 40a satisfies this condition, the terminal-coating resin film 40 exhibits an even higher initial seal strength (seal strength at room temperature). The temperature range in which the primary dispersion peak α exists is preferably 40°C to 110°C, and more preferably 50°C to 100°C from the perspective of the seal strength at room temperature. If the temperature at which the primary dispersion peak α exists is less than 30°C, the heat resistance of the resin layer 40a is decreased, and the seal strength under high temperatures tends to become insufficient. If the temperature at which the primary dispersion peak α exists exceeds 130°C, the flexibility of the resin layer 40a is decreased, and the seal strength at room temperature tends to become insufficient.

The temperature at which the secondary dispersion peak γ and the primary dispersion peak α of the resin layer 40a appear can be controlled by the configuration of the base resin material contained in the resin layer 40a, the draw ratio of the resin layer 40a, or the content of an additive (for example, a plasticizer). The resin layer 40a contains an additive as required. Examples of the additive include a plasticizer, an antioxidant, a slip agent, a flame retardant, an antiblocking agent (AB agent), a light stabilizer, a dehydrating agent, and a tackifier.

Examples of the base resin material contained in the terminal-coating resin film 40 include a polyester-based resin, a polyolefin-based resin, and a polyamide-based resin.

The polyester-based resin is obtained by the copolymerization of an acid component and a glycol component. Examples of the acid component include phthalic acid, terephthalic acid, isophthalic acid, naphthalenedicarboxylic acid, cyclohexanedicarboxylic acid, adipic acid, and sebacic acid. Examples of the glycol component include ethylene glycol, butanediol, pentanediol, hexanediol, neopentyl glycol, diethylene glycol, polytetramethylene glycol, cyclohexanedimethanol, and propanediol. According to studies conducted by the present inventors, a typical PET (copolymer of terephthalic acid and ethylene glycol) has insufficient seal strength under room temperature since the temperature at which the secondary dispersion peak γ exists is out of the range of -130°C to -50°C. When a plasticizer is not added to the resin layer 40a, the resin layer 40a preferably contains a polyester-based resin in which two or more kinds of glycol components are copolymerized with one kind of acid component.

Examples of the polyolefin-based resin include polyethylene and polypropylene resins. Since a typically used polyolefin resin is poor in heat resistance, amide-modified polyethylene or amide-modified polypropylene is preferably used. From the perspective of the adhesion between the metal terminal 30 and the terminal-coating resin film 40, the base resin material of the terminal-coating resin film 40 is preferably a carboxylic acid-modified or maleic anhydride-modified polyolefin or an amide-modified polyolefin.

Examples of the polyamide-based resin include nylon 6 and nylon 6, 6.

From the perspective of adjusting the temperature at which the secondary dispersion peak γ and the primary dispersion peak α of the resin layer 40a appear, the resin layer 40a preferably contains a plasticizer. The plasticizer may be, for example, an ester-based compound. Specific examples include glycol diesters, adipate esters, phthalate esters, diacetyl monoglyceride derivatives, and esters having an ether skeleton. Although it depends on the base resin material of the resin layer 40a, the content of the plasticizer in the resin layer 40a is preferably 30 mass% or less relative to the mass of the resin layer 40a. If excessive plasticizer is added to the resin layer 40a, the temperature at which the secondary dispersion peak γ and the primary dispersion peak α appear is excessively decreased, and the cohesive force tends to be decreased.

In the case where the terminal-coating resin film 40 has a multilayer structure, the resin layer 40a may be disposed on the side that will be in contact with the metal terminal 30 or on the side that will be in contact with the packaging material 10. In the case where the terminal-coating resin film 40 has three or more layers, the resin layer 40a may be located between the resin layer 40b and the resin layer 40c (see FIG. 5(c)).

The thickness of the terminal-coating resin film 40 is preferably 15 µm or more, more preferably 30 µm to 300 µm, and even more preferably 50 µm to 200 µm from the perspective of embedding properties and insulation properties.

When the electrolyte of the fully solid-state battery is a sulfide-based electrolyte, the terminal-coating resin film 40 preferably contains a hydrogen sulfide adsorbent. The terminal-coating resin film 40 containing the hydrogen sulfide adsorbent maintains good seal strength under room temperature and high temperatures even after being exposed to hydrogen sulfide. Examples of the hydrogen sulfide adsorbent include the substances mentioned above.

The content of the hydrogen sulfide adsorbent in the terminal-coating resin film 40 is preferably in the range of 1 mass% to 50 mass%, more preferably 2 mass% to 25 mass%, and even more preferably 5 mass% to 15 mass% relative to the mass of the terminal-coating resin film 40. When the content of the hydrogen sulfide adsorbent in the terminal-coating resin film 40 is 1 mass% or more, the hydrogen sulfide is effectively absorbed or adsorbed, and if the content is 50 mass% or less, the adhesion and the sealant suitability of the terminal-coating resin film 40 are both achieved. In the case where the terminal-coating resin film 40 has a multilayer structure, the layer to be in contact with the metal terminal 30 preferably does not contain the hydrogen sulfide adsorbent from the perspective of the adhesion to the metal terminal 30. That is, the layer to be in contact with the packaging material 10 (for example, the resin layer 40a in FIG. 5(b) and the resin layers 40a and 40c in FIG. 5(c)) preferably contains the hydrogen sulfide adsorbent. In the case where the terminal-coating resin film 40 includes three or more layers, the middle layer (for example, the resin layer 40a in FIG. 5(c)) preferably contains the hydrogen sulfide adsorbent.

### [Method for Selecting Terminal-Coating Resin Film]

A method for selecting the terminal-coating resin film may be performed based on the content of the embodiment described above. That is, the selecting method is for selecting a terminal-coating resin film to be so disposed in a power storage device including a power storage device body and a terminal electrically connected to the power storage device body as to cover an outer peripheral surface of part of the terminal and only needs to include (A) a step of conducting dynamic viscoelastic measurement on a terminal-coating resin film that is to be evaluated, under a condition of 1.0 Hz and (B) a step of determining whether at least one secondary dispersion peak γ exists within a range of -130°C to -50°C in a profile of a loss tangent tan δ obtained by the dynamic viscoelastic measurement. Items disclosed in the above embodiment may be applied to the selecting method as required.

### [Other Aspects of Terminal-Coating Resin Film]

The terminal-coating resin film 40 (hereinafter, referred to as the terminal-coating film 40) may be formed of a resin composition including the first resin including polyolefin and the second resin including at least one resin selected from polyester, polyamide, polycarbonate, and polyphenylene ether (hereinafter, referred to as polyester and/or other resin(s)). The terminal-coating film 40 has a single-layer structure or a multilayer structure. The terminal-coating film 40 having a single-layer structure is constituted by the resin layer 40a (see FIG. 5(a)). The terminal-coating film 40 having a multilayer structure includes at least one resin layer (resin layer 40a) that satisfies the above conditions (see FIGs. 5(b) and 5(c)). In the case where the terminal-coating film 40 has a multilayer structure, from the perspective of the adhesion between the adjacent layers, all layers are preferably formed of similar resin materials. Note that, in this case, like the terminal-coating resin film 40, the sealant layer 16 may be formed of a resin composition including the first resin including polyolefin and the second resin including at least one resin selected from polyester, polyamide, polycarbonate, and polyphenylene ether.

The terminal-coating film 40 preferably contains modified polyolefin having a polar group that reacts with the second resin such as polyester and/or other resin(s). The terminal-coating film 40 including the resin layer 40a having the composition as described above achieves both the seal strength under high temperatures and the initial seal strength (seal strength at room temperature) at a sufficiently high level. Examples of resins constituting the terminal-coating film 40 are given below.

### (Polyolefin Resin)

Examples of polyolefin resin include polyethylene (LDPE, LLDPE, HDPE), polypropylene (homopolymer, block copolymer, and random copolymer), and polybutene. From the perspective of heat resistance and flexibility, polypropylene is preferably used, and in particular, block polypropylene is more preferably used.

### (Polyester Resin)

The polyester resin is obtained by the copolymerization of an acid component and a glycol component. Examples of the acid component include phthalic acid, terephthalic acid, isophthalic acid, naphthalenedicarboxylic acid, cyclohexanedicarboxylic acid, adipic acid, and sebacic acid. Examples of the glycol component include ethylene glycol, butanediol, pentanediol, hexanediol, neopentyl glycol, diethylene glycol, polytetramethylene glycol, cyclohexanedimethanol, and propanediol. Note that, after being heat-sealed under 260°C at 0.5 Mpa for three seconds, the crystallinity of polyester is preferably 10% or more and less than 70%. This is because if the crystallinity of polyester is too low, the seal strength at high temperatures is not sufficiently exerted, and if too high, the flexibility tends to be poor. Due to the above tendency, polyester with a crystallinity of 15% or more and less than 50% is preferably used. As the polyester resin, one that is obtained by copolymerizing the above components is preferably used.

### (Polyamide Resin)

Examples of polyamide resin include nylons such as nylon 6, nylon 11, nylon 12, and nylon 6, 6. Alternatively, aramids having aromaticity may be used. Like polyester, after being heat-sealed, the crystallinity is preferably 10% or more and less than 70%, and more preferably 15% or more and less than 50%.

Since polycarbonate and polyphenylene ether are non-crystalline, there is no preferable range of crystallinity.

Only at least one of polyester, polyamide, and other resins exemplified above needs to be used, and a plurality of resins selected therefrom may be used. Further, one kind of resin or a blend of multiple kinds of resins may be used (for example, the polyolefin may be a mixture of a block copolymer and a random copolymer).

### (Modified Polyolefin)

Non-limiting examples of the functional group to which the second resin reacts include the following.
Polyester: terminal hydroxyl group, terminal carboxyl group, ester bond
Polyamide: terminal amino group, amide bond
Polycarbonate: terminal hydroxyl group, ester bond
Polyphenylene ether: terminal hydroxyl group

Examples of the modifying group that reacts with the above functional groups are as follows:
- Polyester, polycarbonate: hydroxyl group, acid-modified (ester) group, aldehyde group, oxazoline group, glycidyl group, amide group, imino group
- Polyamide reaction: hydroxyl group, acid-modified (ester) group, aldehyde group, glycidyl group
- Polyphenylene ether reaction: acid-modified (ester) group, oxazoline group, glycidyl group, amide group, imino group

Specific examples are as follows:
Hydroxyl group...Poval (Kuraray Co., Ltd.), Melthene-H (Tosoh Corporation)
Glycidyl group...MODIPER (NOF Corporation), LOTADER, BONDINE (Arkema Inc.)
Amide group...APOLHYA (Arkema Inc.)
Imino group...ADMER IP (Mitsui Chemicals, Inc.)
Oxazoline group...EPOCROS (Nippon Shokubai Co., Ltd.)
These are preferred examples of the modifying group.

Examples of acid modification include acid-modified poleolefins that are poleolefins modified with any of unsaturated carboxylic acids, acid anhydrides of unsaturated carboxylic acids, and esters of unsaturated carboxylic acids.

Specifical examples of the unsaturated carboxylic acid include acrylic acid, methacrylic acid, maleic acid, fumaric acid, itaconic acid, citraconic acid, tetrahydrophthalic acid, and bicyclo[2,2,1]hept-2-ene-5,6-dicarboxylic acid.

Examples of the acid anhydride of the unsaturated carboxylic acid include maleic anhydride, itaconic anhydride, citraconic anhydride, tetrahydrophthalic anhydride, and bicyclo[2,2,1]hept-2-ene-5,6-dicarboxylic acid anhydride.

Examples of the esters of unsaturated carboxylic acid include methyl acrylate, methyl methacrylate, ethyl methacrylate, butyl methacrylate, dimethyl maleate, monomethyl maleate, diethyl fumarate, dimethyl itaconate, diethyl citraconate, dimethyl tetrahydrophthalic anhydride, and bicyclo[2,2,1]hept-2-ene-5,6-dimethyl dicarboxylate.

Specifically, the following products may be used, and acid-modified maleic acid is preferably used.

Maleic anhydride...ADMER (Mitsui Chemicals, Inc.), MODIC (Mitsubishi Chemical Corporation), TOYO-TAC (Toyobo Co., Ltd.), SANSTACK (Sanyo Chemical Industries, Ltd.)

Carboxyl group...NUCREL, HIMILAN (DuPont-Mitsui Polychemicals Co., Ltd.) *ionomers may also be used

Ester group...EVAFLEX (DuPont-Mitsui Polychemicals Co., Ltd.), LOTADER, BONDINE, EVATANE (Arkema Inc.)

As for the ratio of each resin in the terminal-coating film 40, the proportion of polyolefin is preferably 10 wt% to 80 wt% from the perspective of the balance between the seal strength at high temperatures and the seal strength at room temperature. When the total amount of resins including polyolefin, polyester and/or other resin(s) is 100 wt%, the proportion of polyester and/or other resin(s) is also preferably 90 wt% to 20 wt%. The proportion of modified polyolefin in the polyolefin is preferably 0.1 wt% to 100 wt%, and more preferably 0.5 wt% to 40 wt%. When the added amount is too small, the reaction with polyester and/or polyamide is hindered. Although there is no problem in the properties when the proportion of the modified polyolefin is 100 wt%, since the modified polyolefin with a low melting point may undesirably decrease the seal strength at high temperatures, the proportion of the modified polyolefin is more preferably 40 wt% or less.

In the case where the terminal-coating film 40 has a multilayer structure, the resin layer 40a may be disposed on the side that will be in contact with the metal terminal 30 or on the side that will be in contact with the packaging material 10. In the case where the terminal-coating film 40 has three or more layers, the resin layer 40a may be located between the resin layer 40b and the resin layer 40c (see FIG. 5(c)).

The thickness of the terminal-coating film 40 is preferably 15 µm or more, more preferably 30 µm to 300 µm, and even more preferably 50 µm to 200 µm from the perspective of embedding properties and insulation properties.

For the electrolyte of the fully solid-state batteries, in general, a sulfide-based electrolyte, an oxide-based electrolyte, or an organic polymer-based electrolyte is used. When the electrolyte of the fully solid-state battery is a sulfide-based electrolyte, the terminal-coating film 40 preferably contains a hydrogen sulfide adsorbent. In the case where the sulfide-based electrolyte is used, moisture entering the cell generates hydrogen sulfide. This may undesirably decrease the adhesion between the metal terminal (tab lead) and the terminal-coating film (tab sealant). Adding the hydrogen sulfide adsorbent maintains the seal strength under room temperature and high temperatures even when the terminal-coating film 40 is exposed to hydrogen sulfide.

Examples of the hydrogen sulfide adsorbent include but are not limited to, for example, zinc oxide, amorphous metal silicates, hydroxides of zirconium or of lanthanoid, tetravalent metal phosphate potassium permanganate, sodium permanganate, aluminum oxide, ferric hydroxide, silver sulfate, silver acetate, isocyanate compounds, aluminum silicate, tetravalent metal phosphates, aluminum potassium sulfate, zeolites, activated carbon, amine-based compounds, and ionomers. The terminal-coating film 40 containing the hydrogen sulfide adsorbent maintains good seal strength under room temperature and high temperatures even after being exposed to hydrogen sulfide.

The content of the hydrogen sulfide adsorbent in the terminal-coating film 40 is preferably in the range of 1 mass% to 50 mass%, more preferably 2 mass% to 25 mass%, and even more preferably 5 mass% to 15 mass% relative to the mass of the terminal-coating film 40. When the content of the hydrogen sulfide adsorbent in the terminal-coating film 40 is 1 mass% or more, the hydrogen sulfide is effectively absorbed or adsorbed, and if the content is 50 mass% or less, the adhesion and the sealant suitability of the terminal-coating film 40 are both achieved. In the case where the terminal-coating film 40 has a multilayer structure, the layer that will be in contact with the metal terminal 30 preferably does not contain the hydrogen sulfide adsorbent from the perspective of adhesion to the metal terminal 30. That is, the layer that will be in contact with the packaging material 10 (for example, the resin layer 40a in FIG. 5(b) or the resin layers 40a and 40c in FIG. 5(c)) preferably contains the hydrogen sulfide adsorbent. In the case where the terminal-coating film 40 includes three or more layers, the middle layer (for example, the resin layer 40a in FIG. 5(c)) preferably contains the hydrogen sulfide adsorbent.

The resin layer 40a contains an additive as required. Examples of the additive include a plasticizer, an antioxidant, a slip agent, a flame retardant, an antiblocking agent (AB agent), a light stabilizer, a dehydrating agent, and a tackifier.

Embodiments of the present disclosure have so far been specifically described. However, the present invention should not be construed as being limited to these embodiments but may be variously modified or changed within the range of the spirit of the present disclosure recited in the claims.

For example, in the embodiments described above, the anticorrosion treatment layer 14 is provided on only one of the surfaces of the barrier layer 13 (the side facing the second adhesive layer 17). However, the anticorrosion treatment layer 14 may also be provided on the other surface of the barrier layer 13 (the side facing the first adhesive layer 12). Alternatively, for example, in the case where the sealant layer 16 is adhered to the barrier layer 13 by thermal lamination, the second adhesive layer 17 may be omitted. When the base layer 11 is provided by coating, the first adhesive layer 12 may be omitted. In the embodiment described above, a fully solid-state battery has been shown as a power storage device to which the packaging material 10 is applied. However, the packaging material 10 may be applied to other power storage devices (e.g., lithium-ion batteries).

### [EXAMPLES]

In the following description, the present disclosure will be described in more detail by way of examples. However, the present disclosure should not be limited to the following examples.

### <Examples 1A to 14A and Comparative Examples 1A to 5A>

### [Materials Used]

The following materials were prepared to produce a terminal-coating resin film according to Examples and Comparative Examples.

### [Base Resin Material]

- Polyester-based resin 1: copolymer of terephthalic acid as acid component and ethylene glycol as glycol component
- Polyester-based resin 2: copolymer of terephthalic acid as acid component, and ethylene glycol and butanediol as glycol component
- Polyester-based resin 3: copolymer of terephthalic acid and isophthalic acid as acid component, and ethylene glycol, butanediol, and neopentyl glycol as glycol component
- Polyester-based resin 4: copolymer of terephthalic acid as acid component, and ethylene glycol and 1,4-cyclohexane dimethanol as glycol component
- Polyester-based resin 5: copolymer of terephthalic acid and isophthalic acid as acid component, and butanediol and hexanediol as glycol component
- Polyester-based resin 6: copolymer of terephthalic acid and isophthalic acid as acid component, and butanediol and hexanediol as glycol component (proportion of butanediol being greater than that in polyester-based resin 5)
- Polyester-based resin 7: copolymer of naphthalenedicarboxylic acid as acid component and 1,4-cyclohexane dimethanol as glycol component
- Polyester-based resin 8: copolymer of terephthalic acid and isophthalic acid as acid component, and ethylene glycol and hexanediol as glycol component
- Polyolefin-based resin 1: amide-modified polyethylene
- Polyolefin-based resin 2: random polypropylene

### [Plasticizer]

- Glycol diester: 10 parts by mass relative to 100 parts by mass of base resin material was added as required

### [Hydrogen Sulfide Absorbent]

- Zinc oxide: 3 parts by mass relative to 100 parts by mass of base resin material was added as required

### (Example 1A)

A terminal-coating resin film (single layer with a thickness of 100 µm) comprised of the following resin composition was produced by blown film extrusion.
- Polyester-based resin 1: 100 parts by mass
- Plasticizer: 10 parts by mass
- Hydrogen sulfide adsorbent: 3 parts by mass

### (Example 2A)

A terminal-coating resin film (single layer with a thickness of 100 µm) was produced in the same manner as Example 1A except that the polyester-based resin 2 was used instead of the polyester-based resin 1.

### (Example 3A)

A terminal-coating resin film (single layer with a thickness of 100 µm) was produced in the same manner as Example 1A except that the hydrogen sulfide adsorbent was not used.

### (Example 4A)

A terminal-coating resin film (single layer with a thickness of 100 µm) comprised of the polyester-based resin 3 was produced by blown film extrusion.

### (Example 5A)

A terminal-coating resin film (single layer with a thickness of 100 µm) was produced in the same manner as Example 4A except that the plasticizer (10 parts by mass) and the hydrogen sulfide adsorbent (3 parts by mass) were added to the polyester-based resin 3.

### (Example 6A)

A terminal-coating resin film (single layer with a thickness of 100 µm) comprised of the polyester-based resin 4 and the hydrogen sulfide adsorbent (3 parts by mass) was produced by blown film extrusion.

### (Example 7A)

A terminal-coating resin film (single layer with a thickness of 100 µm) comprised of the polyester-based resin 5 and the hydrogen sulfide adsorbent (3 parts by mass) was produced by blown film extrusion.

### (Example 8A)

A terminal-coating resin film (single layer with a thickness of 100 µm) comprised of the polyester-based resin 6 and the hydrogen sulfide adsorbent (3 parts by mass) was produced by blown film extrusion.

### (Example 9A)

A terminal-coating resin film (single layer with a thickness of 100 µm) comprised of the polyolefin-based resin 1 and the hydrogen sulfide adsorbent (3 parts by mass) was produced by blown film extrusion.

### (Example 10A)

A terminal-coating resin film having a two-layer structure (50 µm/50 µm) was produced by blown film extrusion.
- Layer disposed to face packaging material: polyester-based resin 1 and hydrogen sulfide adsorbent (3 parts by mass)
- Layer disposed to face metal terminal: polyester-based resin 7

### (Example 11A)

A terminal-coating resin film having a three-layer structure (25 µm/50 µm/25 µm) was produced by blown film extrusion.
- Layer disposed to face packaging material: polyester-based resin 2, plasticizer (10 parts by mass), and hydrogen sulfide adsorbent (3 parts by mass)
- Middle layer: polyester-based resin 1, plasticizer (10 parts by mass), and hydrogen sulfide adsorbent (3 parts by mass)
- Layer disposed to face metal terminal: polyester-based resin 2 and plasticizer (10 parts by mass)

### (Example 12A)

A terminal-coating resin film having a three-layer structure (25 µm/50 µm/25 µm) was produced by blown film extrusion.
- Layer disposed to face packaging material: polyester-based resin 1 and plasticizer (10 parts by mass)
- Middle layer: polyester-based resin 8 and hydrogen sulfide adsorbent (3 parts by mass)
- Layer disposed to face metal terminal: polyester-based resin 1 and plasticizer (10 parts by mass)

### (Example 13A)

A terminal-coating resin film having a two-layer structure (50 µm/50 µm) was produced by blown film extrusion.
- Layer disposed to face packaging material: polyester-based resin 1, plasticizer (10 parts by mass), and hydrogen sulfide adsorbent (3 parts by mass)
- Layer disposed to face metal terminal: polyester-based resin 8

### (Example 14A)

A terminal-coating resin film having a three-layer structure (25 µm/50 µm/25 µm) was produced by blown film extrusion.
- Layer disposed to face packaging material: polyester-based resin 7
- Middle layer: polyester-based resin 1, plasticizer (10 parts by mass), and hydrogen sulfide adsorbent (3 parts by mass)
- Layer disposed to face metal terminal: polyester-based resin 7

### (Comparative Example 1A)

A terminal-coating resin film (single layer with a thickness of 100 µm) comprised of the polyester-based resin 7 and the hydrogen sulfide adsorbent (3 parts by mass) was produced by blown film extrusion.

### (Comparative Example 2A)

A terminal-coating resin film (single layer with a thickness of 100 µm) comprised of the polyester-based resin 1 and the hydrogen sulfide adsorbent (3 parts by mass) was produced by blown film extrusion.

### (Comparative Example 3A)

A terminal-coating resin film (single layer with a thickness of 100 µm) comprised of the polyester-based resin 8 and the hydrogen sulfide adsorbent (3 parts by mass) was produced by blown film extrusion.

### (Comparative Example 4A)

A terminal-coating resin film (single layer with a thickness of 100 µm) comprised of the polyester-based resin 2 was produced by blown film extrusion.

### (Comparative Example 5A)

A terminal-coating resin film having a three-layer structure (25 µm/50 µm/25 µm) was produced by blown film extrusion.
- Layer disposed to face packaging material: polyester-based resin 7
- Middle layer: polyester-based resin 8 and hydrogen sulfide adsorbent (3 parts by mass)
- Layer disposed to face metal terminal: polyester-based resin 7

### <Evaluation>

The following evaluation tests were conducted on the terminal-coating resin film obtained in Examples and Comparative Examples.

### [Loss Tangent tan δ of Terminal-Coating Resin Film]

The terminal-coating resin film was cut into a size of 10 mm (TD) × 30 mm (MD) to produce a test specimen. The test specimen was held between chucks at a distance of 20 mm. Each test specimen was measured by the method according to JIS K 7244-4 using a dynamic viscoelasticity measuring device (product of SII, trade name: DMS6100) under the following conditions. The loss tangent tan δ was calculated from the loss elastic modulus E" and the storage elastic modulus E'. The temperatures of the secondary dispersion peak γ and the primary dispersion peak α were acquired from the profile of the obtained tan δ. Tables 1 to 3 show the results.
- Peeling mode: pulling
- Rate of temperature rise: 2°C/min
- Temperature range: -150°C to 150°C
- Frequency: 1.0 Hz

### [Initial Seal Strength]

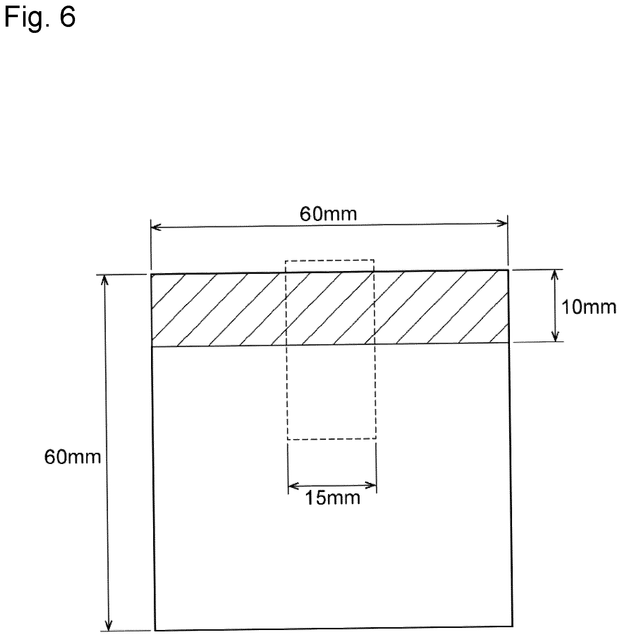

An aluminum plate (50 mm × 50 mm) that has been subjected to chemical conversion treatment was prepared. The terminal-coating resin film was cut into a size of 50 mm (TD) × 100 mm (MD) to produce a test specimen. The test specimen was folded into half, and the aluminum plate was placed in between. One side of the laminate (test specimen/aluminum plate/test specimen) was thermally sealed with a sealing bar having a width of 10 mm at 165°C and 0.6 MPa for 10 seconds. After that, the heat-sealed portion was cut into a piece having a width of 15 mm to produce a measurement sample (see FIG. 6). The seal strength was measured at a peeling speed of 50 mm/min at room temperature (23°C). Based on the results, evaluations were performed according to the following criteria. Tables 1 to 3 show the results. In FIG. 6, the hatched section indicates the thermally sealed section, and the section with a width of 15 mm indicates the section where the strength will be measured.
A: Burst strength was 25 N/15 mm or more
B: Burst strength was 20 N/15 mm or more and less than 25 N/15 mm.
C: Burst strength was 15 N/15 mm or more and less than 20 N/15 mm.
D: Burst strength was less than 15 N/15 mm

### [Seal Strength at High Temperatures]

An aluminum plate (50 mm × 50 mm) that has been subjected to chemical conversion treatment was prepared. The terminal-coating resin film was cut into a size of 50 mm (TD) × 100 mm (MD) to produce a test specimen. The test specimen was folded into half, and the aluminum plate was placed in between. One side of the laminate (test specimen/aluminum plate/test specimen) was thermally sealed with a sealing bar having a width of 10 mm at 165°C and 0.6 MPa for 10 seconds. After that, the heat-sealed section was cut into a piece having a width of 15 mm, which was left for five minutes in a 150°C environment. Then, the seal strength was measured at a peeling speed of 50 mm/min in a 150°C environment. Based on the results, evaluations were performed according to the following criteria. Tables 1 to 3 show the results.
A: Burst strength was 15 N/15 mm or more
B: Burst strength was 10 N/15 mm or more and less than 15 N/15 mm.
C: Burst strength was 5 N/15 mm or more and less than 10 N/15 mm.
D: Burst strength was less than 5 N/15 mm

### [Seal Strength after Being Exposed to Hydrogen Sulfide (in Room-Temperature Environment)]

An aluminum plate (50 mm × 50 mm) that has been subjected to chemical conversion treatment was prepared. The terminal-coating resin film was cut into a size of 50 mm (TD) × 100 mm (MD) to produce a test specimen. The test specimen was folded into half, and the aluminum plate was placed in between. One side of the laminate (test specimen/aluminum plate/test specimen) was thermally sealed with a sealing bar having a width of 10 mm at 165°C and 0.6 MPa for 10 seconds. After that, the heat-sealed section was cut into a piece having a width of 15 mm, which was left for 72 hours in a room-temperature environment with a hydrogen sulfide concentration of 20 ppm. Then, the seal strength was measured at a peeling speed of 50 mm/min in a room-temperature environment. Based on the results, evaluations were performed according to the following criteria. Tables 1 to 3 show the results.
A: Burst strength was 25 N/15 mm or more
B: Burst strength was 20 N/15 mm or more and less than 25 N/15 mm.
C: Burst strength was 15 N/15 mm or more and less than 20 N/15 mm.
D: Burst strength was less than 15 N/15 mm

### [Seal Strength after Being Exposed to Hydrogen Sulfide (in 150°C Environment)]

An aluminum plate (50 mm × 50 mm) that has been subjected to chemical conversion treatment was prepared. The terminal-coating resin film was cut into a size of 50 mm (TD) × 100 mm (MD) to produce a test specimen. The test specimen was folded into half, and the aluminum plate was placed in between. One side of the laminate (test specimen/aluminum plate/test specimen) was thermally sealed with a sealing bar having a width of 10 mm at 165°C and 0.6 MPa for 10 seconds. After that, the heat-sealed section was cut into a piece having a width of 15 mm and left for 72 hours in a room-temperature environment with a hydrogen sulfide concentration of 20 ppm. After that, the sample was left for five minutes in a 150°C environment. Then, the seal strength was measured at a peeling speed of 50 mm/min in a 150°C environment. Based on the results, evaluations were performed according to the following criteria. Tables 1 to 3 show the results.
A: Burst strength was 15 N/15 mm or more
B: Burst strength was 10 N/15 mm or more and less than 15 N/15 mm.
C: Burst strength was 5 N/15 mm or more and less than 10 N/15 mm.
D: Burst strength was less than 5 N/15 mm

**[Table 1]**

| | | Example 1A | Example 2A | Example 3A | Example 4A | Example 5A | Example 6A | Example 7A | Example 8A | Example 9A |
|---|---|---|---|---|---|---|---|---|---|---|
| Terminal-coating resin film (single layer) | Base resin material | Polyester 1 | Polyester 2 | Polyester 1 | Polyester 3 | Polyester 3 | Polyester 4 | Polyester 5 | Polyester 6 | Polyolefin 1 |
| | Plasticizer | Yes | Yes | Yes | No | Yes | No | No | No | No |
| | Hydrogen sulfide adsorbent | Yes | Yes | No | No | Yes | Yes | Yes | Yes | Yes |
| Peak temperature (°C) | Secondary dispersion peak γ | -90 | -108 | -90 | -107 | -107 | -74 | -115 | -126 | -128 |
| | Primary dispersion peak α | 78 | 55 | 78 | 25 | 25 | 89 | 46 | 46 | 35 |
| Evaluation of seal strength | Initial (room temperature) | A | A | A | B | B | A | A | A | A |
| | In 150°C environment | A | A | A | C | C | A | B | C | C |
| | After exposure to hydrogen sulfide (in room temperature environment) | A | A | B | C | B | A | A | A | A |
| | After exposure to hydrogen sulfide (in 150°C environment) | A | A | B | C | C | A | B | C | C |

**[Table 2]**

| | | | Example 10A | Example 11A | Example 12A | Example 13A | Example 14A | Comparative Example 5A |
|---|---|---|---|---|---|---|---|---|
| Terminal-coating resin film (multilayer) | Layer disposed to face packaging material | Base resin material | Polyester 1 | Polyester 2 | Polyester 1 | Polyester 1 | Polyester 7 | Polyester 7 |
| | | Plasticizer | No | Yes | Yes | Yes | No | No |
| | | Hydrogen sulfide adsorbent | Yes | Yes | No | Yes | No | No |
| | Middle layer | Base resin material | - | Polyester 1 | Polyester 8 | - | Polyester 1 | Polyester 8 |
| | | Plasticizer | - | Yes | No | - | Yes | No |
| | | Hydrogen sulfide adsorbent | - | Yes | Yes | - | Yes | Yes |
| | Layer disposed to face metal terminal | Base resin material | Polyester 7 | Polyester 2 | Polyester 1 | Polyester 8 | Polyester 7 | Polyester 7 |
| | | Plasticizer | No | Yes | Yes | No | No | No |
| | | Hydrogen sulfide adsorbent | No | No | No | No | No | No |
| Peak temperature (°C) | Secondary dispersion peak γ | | -90, -40 | -90, -108 | -90, -132 | -90, -132 | -40, -90 | -40, -132 |
| | Primary dispersion peak α | | 78, 140 | 78,55 | 78, 70 | 78, 70 | 140, 78 | 140, 70 |
| Evaluation of seal strength | Initial (room temperature) | | B | A | A | A | c | D |
| | In 150°C environment | | A | A | C | C | A | D |
| | | After exposure to hydrogen sulfide (in room temperature environment) | B | A | A | A | C | D |
| | | After exposure to hydrogen sulfide (in 150°C environment) | A | A | C | C | A | D |

**[Table 3]**

| | | Comparative Example 1A | Comparative Example 2A | Comparative Example 3A | Comparative Example 4A |
|---|---|---|---|---|---|
| Terminal-coating resin film (single layer) | Base resin material | Polyester 7 | Polyester 1 | Polyester 8 | Polyolefin 2 |
| | Plasticizer | No | No | No | No |
| | Hydrogen sulfide adsorbent | Yes | Yes | Yes | No |
| Peak temperature (°C) | Secondary dispersion peak γ | -40 | -45 | -132 | -140 |
| | Primary dispersion peak α | 140 | 110 | 70 | -5 |
| Evaluation of seal strength | Initial (room temperature) | D | D | A | A |
| | In 150°C environment | A | A | D | D |
| | After exposure to hydrogen sulfide (in room temperature environment) | D | D | A | B |
| | After exposure to hydrogen sulfide (in 150°C environment) | A | A | D | D |

In Tables 1 to 3, no evaluation D in all situations can be regarded as having good overall quality. The seal strengths of Examples 1A to 14A were evaluated as A to C. In contrast, the seal strength of Comparative Examples 1A to 5A was evaluated as D in some situations. Specifically, the seal strength of Comparative Example 1A at room temperature (initial and after being exposed to hydrogen sulfide) was evaluated as D. This is probably because the temperature of the secondary dispersion peak γ was higher than the range of -130°C to -50°C, and the temperature of the primary dispersion peak α was also higher than the range of 30°C to 130°C. The seal strength of Comparative Example 2A at room temperature (initial and after being exposed to hydrogen sulfide) was also evaluated as D. This is probably because the temperature of the secondary dispersion peak γ was higher than the range of -130°C to -50°C. The seal strength of Comparative Example 3A in a 150°C environment was evaluated as D for both before and after being exposed to hydrogen sulfide. This is probably because the temperature of the secondary dispersion peak γ was lower than the range of -130°C to -50°C. The seal strength of Comparative Example 4Ain a 150°C environment was also evaluated as D for both before and after being exposed to hydrogen sulfide. This is probably because the temperature of the secondary dispersion peak γ was lower than the range of -130°C to -50°C, and the temperature of the primary dispersion peak α was also lower than the range of 30°C to 130°C. The seal strength of Comparative Example 5A was evaluated as D in all situations.

### <Examples 1B to 28B and Comparative Examples 1B to 4B>

### [Materials Used]

The following materials were prepared to produce a terminal-coating film according to Examples and Comparative Examples.

### [Resin Material]

- Polyolefin (block polypropylene): NOVATEC PP, product of Japan Polypropylene Corporation
- Polyester 1: copolymer of terephthalic acid as acid component and ethylene glycol as glycol component
- Polyester 2: copolymer of terephthalic acid as acid component and ethylene glycol as glycol component (ethylene glycol component was greater than that in polyester 1)
- Polyester 3: copolymer of naphthalenedicarboxylic acid as acid component and ethylene glycol as glycol component
- Polyester 4: copolymer of terephthalic acid as acid component, and ethylene glycol, butanediol, and 1,4-cyclohexane dimethanol as glycol component
- Polyester 5: copolymer of naphthalenedicarboxylic acid as acid component and ethylene glycol as glycol component (ethylene glycol component was less than that in polyester 3)
- Polyamide (nylon 6 (Ny6)): GLAMIDE, product of Toyobo Co., Ltd.
- Polycarbonate: Iupilon, product of Mitsubishi Chemical Corporation
- Polyphenylene ether: XYRON, product of Asahi Kasei Corporation
- Modified polyolefin 1 (maleic anhydride): TOYO-TAC (PP), product of Toyobo Co., Ltd.
- Modified polyolefin 2 (hydroxyl group): Melthene, product of TOSOH Corporation
- Modified polyolefin 3 (carboxyl group): NUCREL, product of DuPont-Mitsui Polychemicals Co., Ltd.
- Modified polyolefin 4 (ester group): EVATANE, product of Arkema Inc.
Note that, polyolefin (modified polyolefin), polyester and/or other resin(s) are melt-blended in advance using a twin-screw compounder.

### [Hydrogen Sulfide Absorbent]

- Zinc oxide: addition of three parts by weight relative to the weight of terminal-coating film

### Evaluation Method]

### (Producing Samples)

As samples for Examples that use the above resin materials, terminal-coating film samples cut into a size of 50 mm (TD) × 100 mm (MD) were produced. Each sample was folded in half with an aluminum plate that has been subjected to chemical conversion treatment and cut into a size of 50 mm × 50 mm being sandwiched between the halves. One side of the sample was thermally sealed with a sealing bar having a width of 10 mm at 165°C and 0.6 MPa for 10 seconds. After that, the thermally sealed section was cut into a piece having a width of 15 mm. Refer to FIG. 6 for the schematic shape of the samples.

### (Initial Heat Seal Strength)

The seal strengths of the produced samples were measured in a room-temperature environment at a speed of 50 mm/min. The results were ranked as follows.
A: Burst strength was 25 N/15 mm or more
B: Burst strength was 20 N/15 mm or more and less than 25 N/15 mm.
C: Burst strength was 15 N/15 mm or more and less than 20 N/15 mm.
D: Burst strength was less than 15 N/15 mm

### (Initial Heat Seal Strength after Being Exposed to Hydrogen Sulfide)

The produced samples were left at room temperature for 72 hours with a hydrogen sulfide concentration of 20 ppm, and the seal strengths of the samples were measured at a speed of 50 mm/min. The results were ranked as follows.
A: Burst strength was 25 N/15 mm or more
B: Burst strength was 20 N/15 mm or more and less than 25 N/15 mm.
C: Burst strength was 15 N/15 mm or more and less than 20 N/15 mm.
D: Burst strength was less than 15 N/15 mm

### (Heat Seal Strength at High Temperatures)

The produced samples were left in a 150°C environment for 5 minutes, and the seal strengths of the samples were measured at a speed of 50 mm/min in a 150°C environment. The results were ranked as follows.
A: Burst strength was 15 N/15 mm or more
B: Burst strength was 10 N/15 mm or more and less than 15 N/15 mm.
C: Burst strength was 5 N/15 mm or more and less than 10 N/15 mm.
D: Burst strength was less than 5 N/15 mm

### (Heat Seal Strength at High Temperatures after Being Exposed to Hydrogen Sulfide)

The produced samples were left at room temperature for 72 hours with a hydrogen sulfide concentration of 20 ppm and then left in a 150°C environment for 5 minutes. After that, the seal strengths of the samples were measured at a speed of 50 mm/min in a 150°C environment. The results were ranked as follows.
A: Burst strength was 15 N/15 mm or more
B: Burst strength was 10 N/15 mm or more and less than 15 N/15 mm.
C: Burst strength was 5 N/15 mm or more and less than 10 N/15 mm.
D: Burst strength was less than 5 N/15 mm

Tables 4 to 6 show the resin compositions and the evaluation results of Examples 1B to 28B and Comparative Examples 1B to 4B that use the samples in which the resin composition is varied. Note that, no evaluation D in all situations can be regarded as having good overall quality.

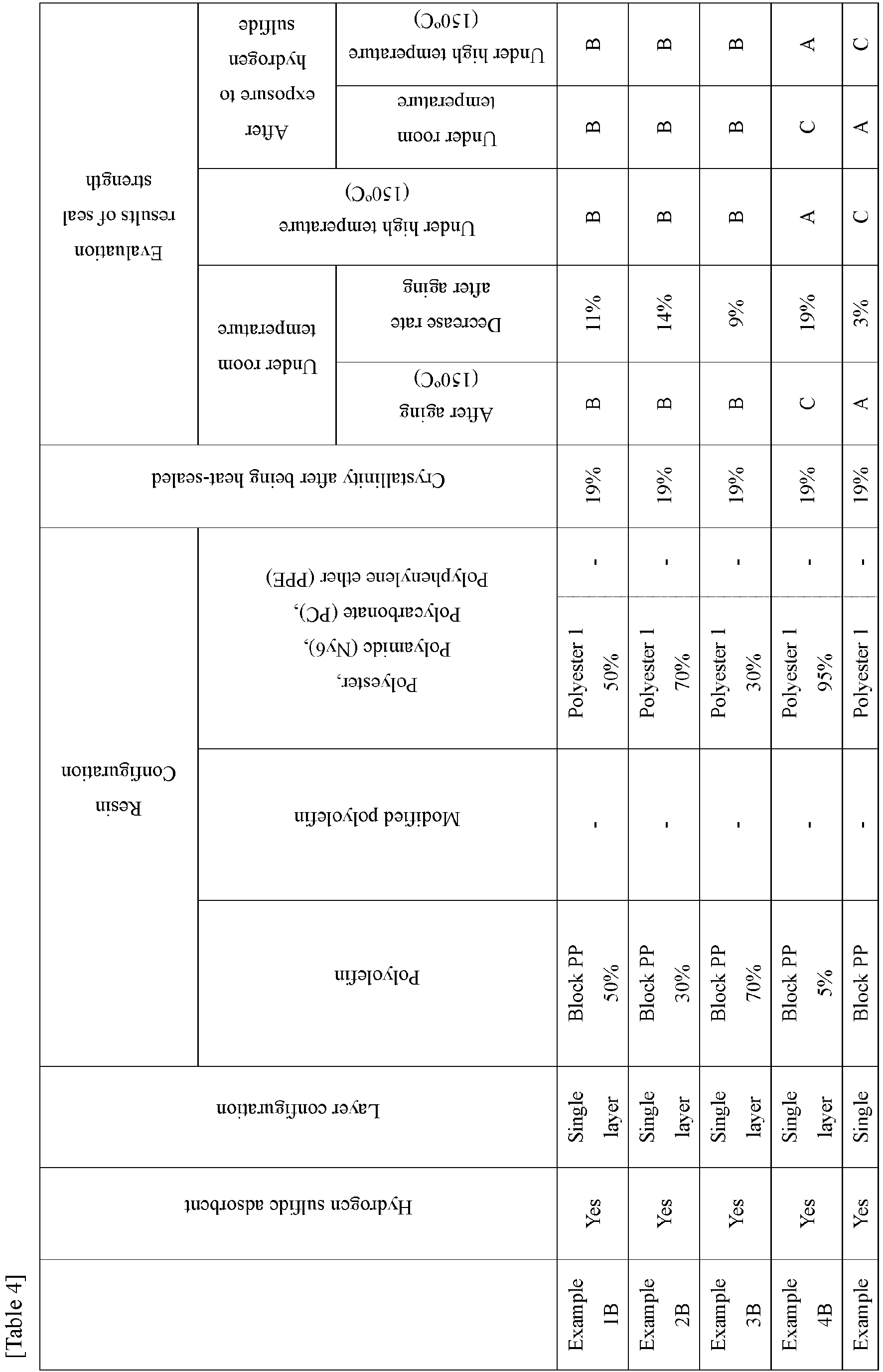

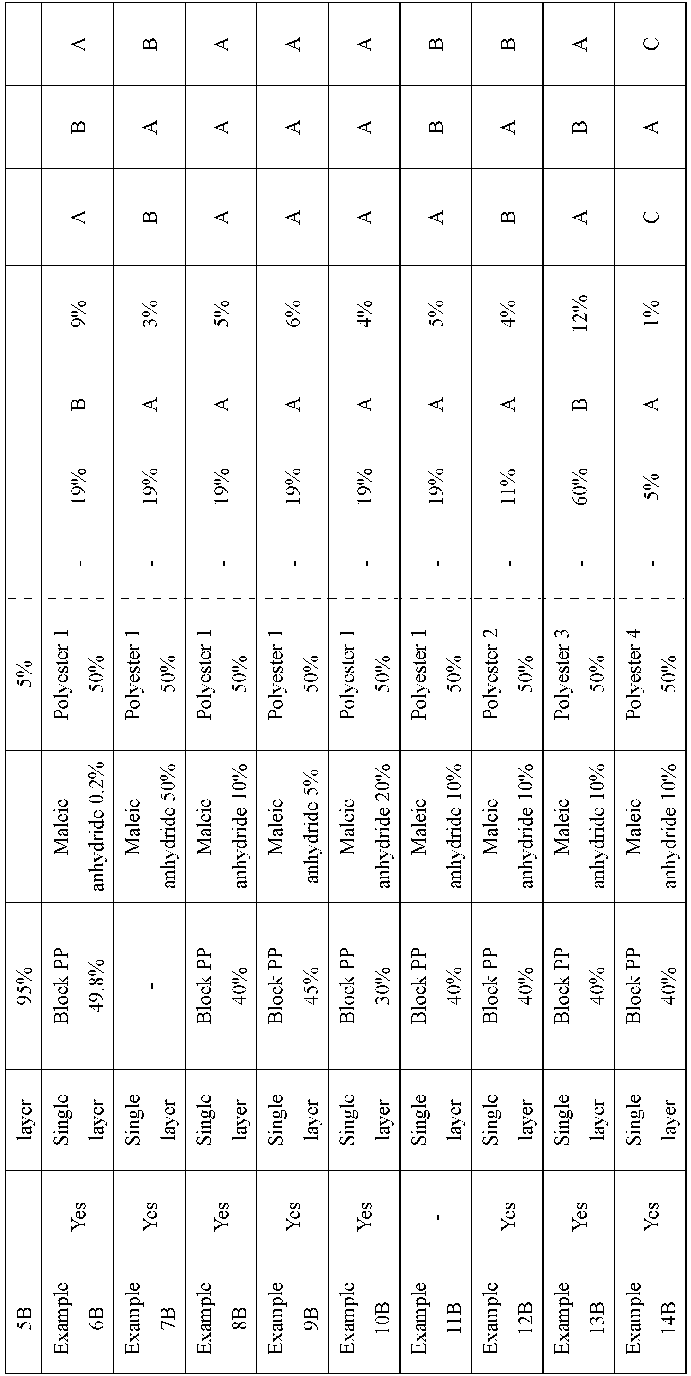

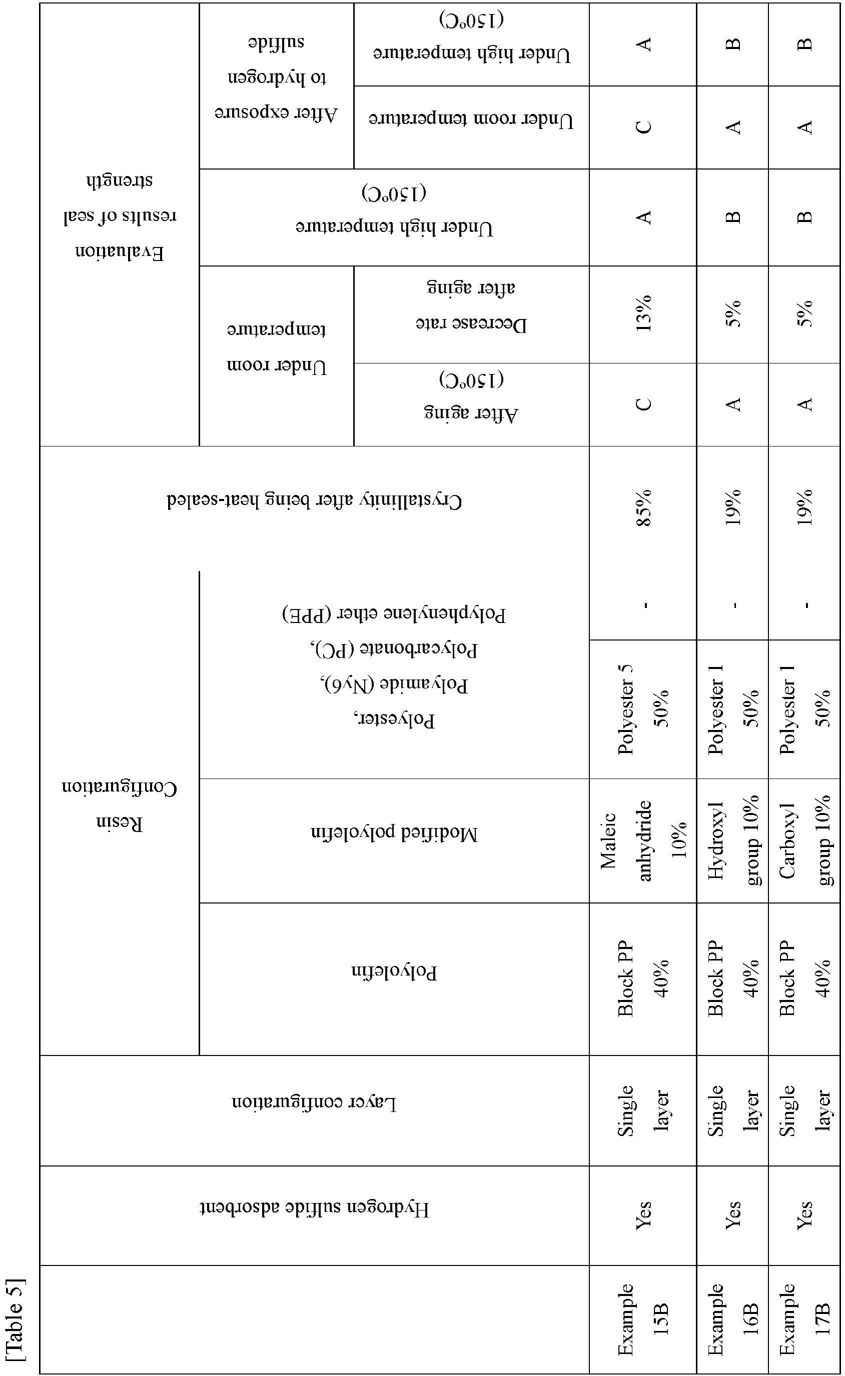

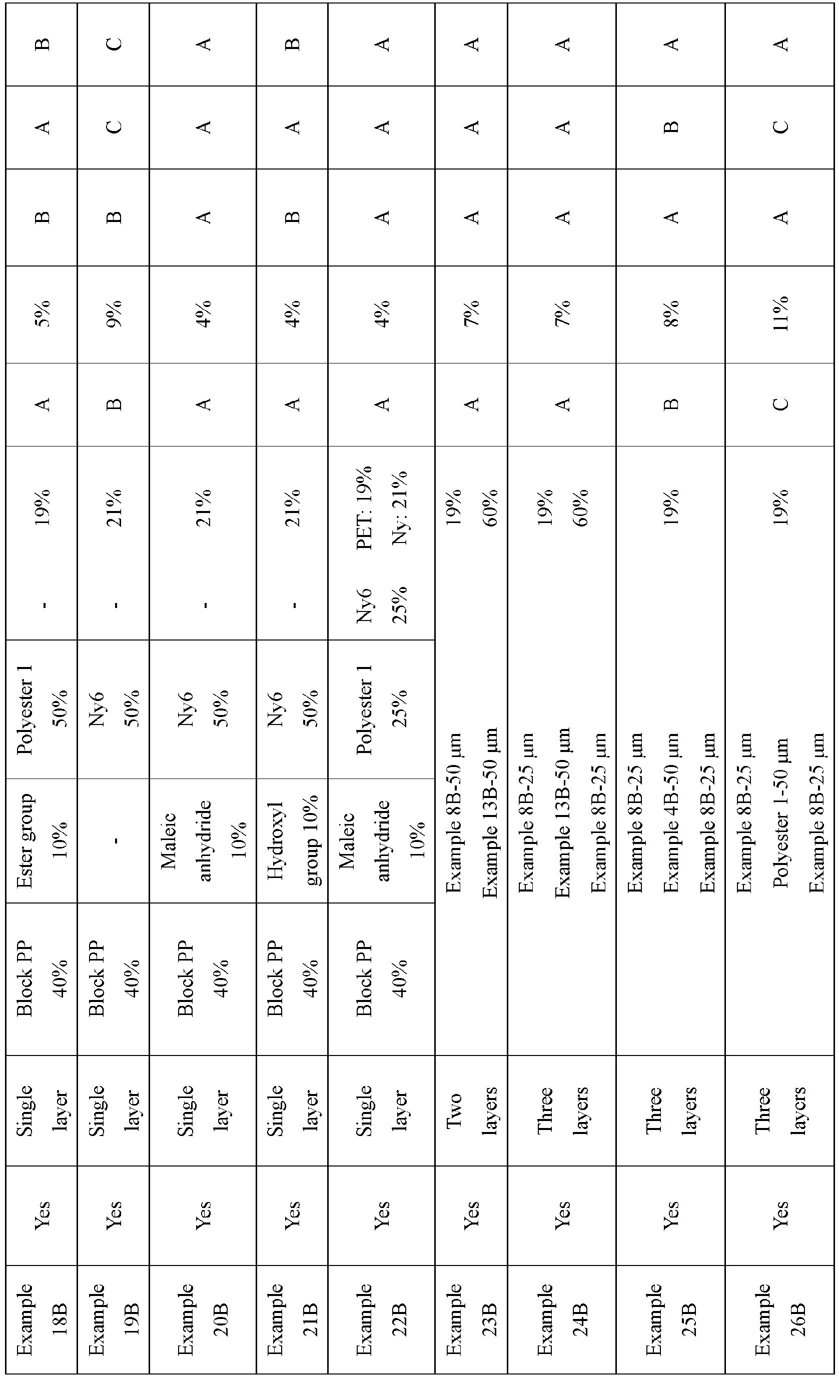

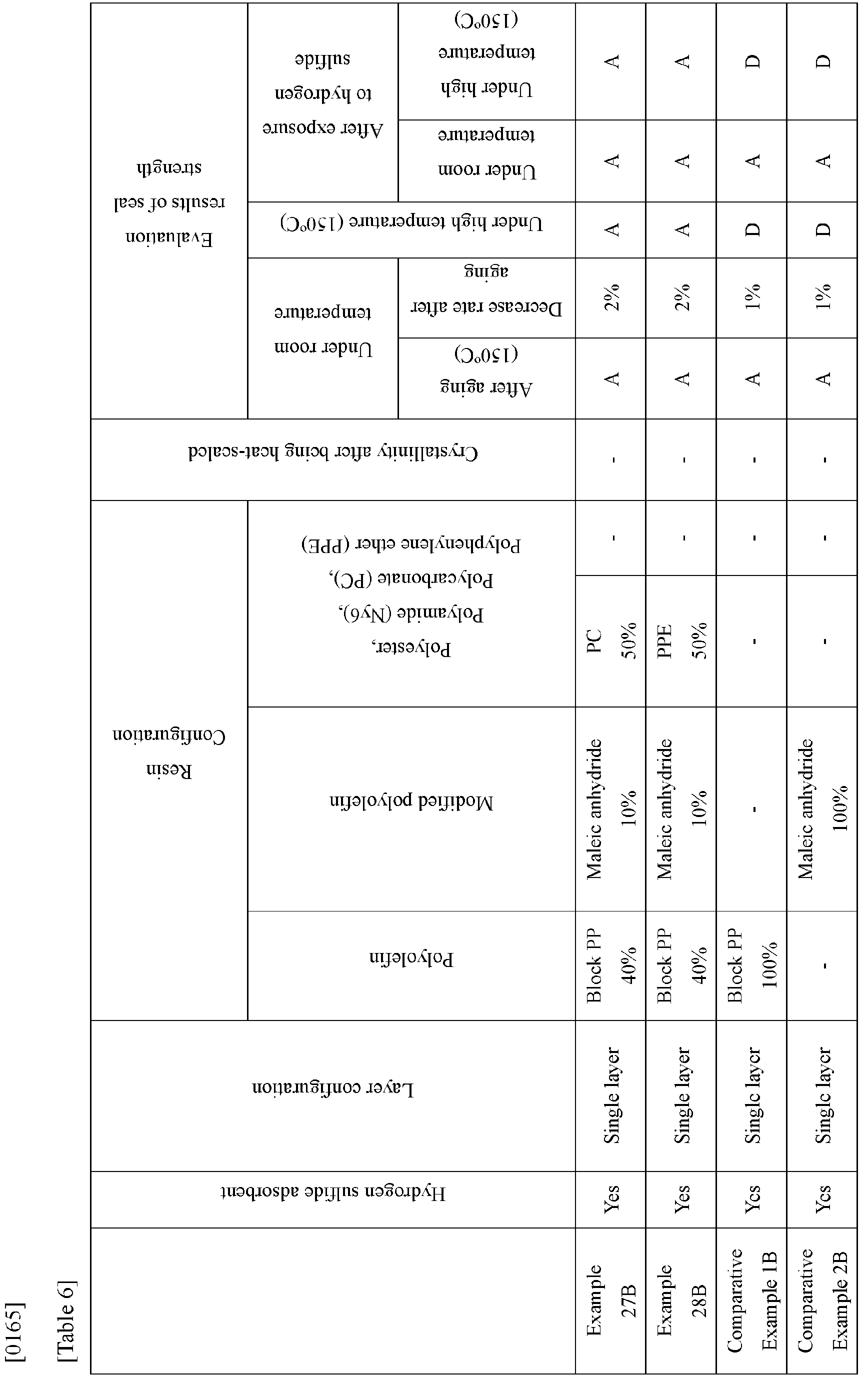

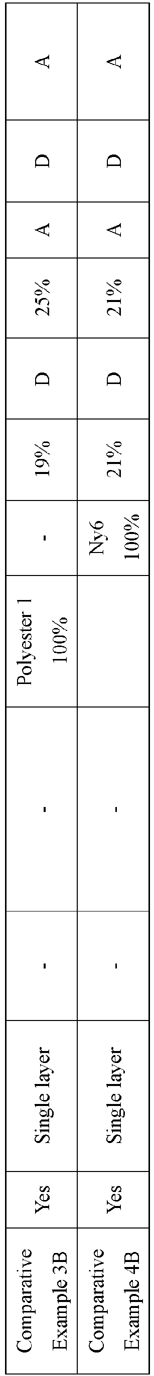

As apparent from the results shown in Tables 4 to 6, in each Example, it was confirmed that the sample was evaluated as having a good quality under all of four conditions including the initial heat seal strength, the initial heat seal strength after being exposed to hydrogen sulfide, the heat seal strength at high temperatures, and the heat seal strength at high temperatures after being exposed to hydrogen sulfide. In contrast, Comparative Examples all had insufficient quality. For example, in Comparative Examples 1B and 2B containing only a polyolefin-based resin as a resin material, the sealing property at high temperatures was poor. In Comparative Example 3B containing only a polyester resin as a resin material and Comparative Example 4B containing only a polyamide resin as a resin material, the initial seal strength was poor.

### [Industrial Applicability]

One aspect of the present disclosure provides a terminal-coating resin film that achieves both the seal strength under high temperatures and the initial seal strength at a sufficiently high level and a method for selecting the terminal-coating resin film. The present disclosure also provides a power storage device that uses the above terminal-coating resin film. Another aspect of the present disclosure provides a power storage device terminal-coating film that achieves both the seal strength under high temperatures and the initial seal strength under room temperature at a sufficiently high level.

### [Reference Signs List]

- 10: Power storage device packaging material
- 11: Base layer
- 12: First adhesive layer
- 13: Barrier layer
- 14: Anticorrosion treatment layer
- 16: Sealant layer
- 16a: First resin layer
- 16b: Second resin layer
- 16c: Third resin layer
- 17: Second adhesive layer
- 30: Metal terminal
- 40: Terminal-coating resin film
- 40a, 40b, 40c: Resin layer
- 50: Power storage device body
- 100: Power storage device

## Claims

1. A terminal-coating resin film to be so disposed in a power storage device including a power storage device body and a terminal electrically connected to the power storage device body as to cover an outer peripheral surface of part of the terminal, the terminal-coating resin film comprising:
a single-layer structure or a multilayer structure; and
a resin layer having at least one secondary dispersion peak γ within a range of -130°C to -50°C in a profile of a loss tangent tan δ obtained by dynamic viscoelastic measurement conducted on the terminal-coating resin film under a condition of 1.0 Hz.

2. The terminal-coating resin film according to claim 1, wherein the resin layer has at least one primary dispersion peak α within a range of 30°C to 130°C in the profile of the loss tangent tan δ.

3. The terminal-coating resin film according to claim 1 or 2, wherein the resin layer contains a plasticizer.

4. The terminal-coating resin film according to any one of claims 1 to 3, comprising a hydrogen sulfide adsorbent.

5. A method for selecting a terminal-coating resin film to be so disposed in a power storage device including a power storage device body and a terminal electrically connected to the power storage device body as to cover an outer peripheral surface of part of the terminal, the method comprising:
(A) conducting dynamic viscoelastic measurement on a terminal-coating resin film that is to be evaluated, under a condition of 1.0 Hz; and
(B) determining whether at least one secondary dispersion peak γ exists within a range of -130°C to -50°C in a profile of a loss tangent tan δ obtained by the dynamic viscoelastic measurement.

6. A power storage device comprising:
a power storage device body;
a terminal extending from the power storage device body;
a packaging material covering part of the terminal and holding the power storage device body therein; and
the terminal-coating resin film according to any one of claims 1 to 4, the terminal-coating resin film being disposed between the terminal and the packaging material.

7. The power storage device according to claim 6, wherein
the packaging material has a laminate structure including at least a base layer, a barrier layer, and a sealant layer in this order, and
the sealant layer has at least one secondary dispersion peak γ within a range of -130°C to -50°C in a profile of a loss tangent tan δ obtained by dynamic viscoelastic measurement conducted on the sealant layer under a condition of 1.0 Hz.

8. The power storage device according to claim 7, wherein the sealant layer has at least one primary dispersion peak α within a range of 30°C to 130°C in the profile of the loss tangent tan δ.

9. The power storage device according to claim 7 or 8, wherein the sealant layer contains a plasticizer.

10. The power storage device according to any one of claims 7 to 9, wherein the sealant layer contains a hydrogen sulfide adsorbent.

11. The power storage device according to any one of claims 7 to 10, further comprising
an adhesive layer between the barrier layer and the sealant layer, wherein
the adhesive layer contains a hydrogen sulfide adsorbent.

12. The power storage device according to any one of claims 7 to 11, further comprising an anticorrosion treatment layer provided on at least one surface of the barrier layer.

13. A power storage device terminal-coating film to be so disposed in a power storage device including a power storage device body and a metal terminal electrically connected to the power storage device body as to cover an outer peripheral surface of part of the metal terminal, the terminal-coating film **characterized in that**,
the terminal-coating film is comprised of a resin composition containing a first resin and a second resin, the first resin including polyolefin, the second resin including at least one resin selected from polyester, polyamide, polycarbonate, and polyphenylene ether.

14. The power storage device terminal-coating film according to claim 13, **characterized in that** the terminal-coating film contains modified polyolefin having a polar group that reacts with the second resin.

15. The power storage device terminal-coating film according to claim 13 or 14, **characterized in that** the modified polyolefin is maleic anhydride-modified polyolefin.

16. The power storage device terminal-coating film according to any one of claims 13 to 15, **characterized in that**, polyester or polyamide contained in the terminal-coating film exhibits a crystallinity of 10% or more and less than 70% after the terminal-coating film is heat-sealed under conditions of 260°C at 0.5 Mpa for three seconds and cooled at room temperature.

17. The power storage device terminal-coating film according to any one of claims 13 to 16, **characterized in that** the terminal-coating film contains a hydrogen sulfide adsorbent.
